# EUROPEAN PATENT APPLICATION

(11) **EP 4 708 649 A1**
(43) Date of publication of application: **11.03.2026**
(21) Application number: 24848546.8
(22) Date of filing: 01.02.2024
(51) Int. Cl.: H02K 21/38, F16H 49/00

(54) **STATOR, MAGNETIC GEAR ELECTRIC MACHINE, AND METHOD FOR ASSEMBLING STATOR**

(30) Priority: 28.07.2023 JP 2023122922
(71) Applicant: Mitsubishi Heavy Industries, Ltd., Tokyo 100-8332 (JP)
(72) Inventor: SHIMONO, Kodai, Tokyo 100-8332 (JP); OKABE, Ryoji, Tokyo 100-8332 (JP); SHIMIZU, Masahiko, Tokyo 100-8332 (JP); IKEMI, Takeshi, Tokyo 100-8332 (JP); SASAKI, Mikito, Tokyo 100-8332 (JP)
(74) Representative: Studio Torta S.p.A.
(86) International application number: PCT/JP2024/003260
(87) International publication number: WO 2025/027883

(57) **Abstract**

A group of magnets in a Halbach array constituting a stator includes: a first radial magnet magnetized radially outward; a first circumferential magnet disposed on one side of the first radial magnet in the circumferential direction and magnetized to the one side; and a second circumferential magnet disposed on the other side of the first radial magnet in the circumferential direction and magnetized to the other side. At least one of one end surface or the other end surface of the first radial magnet in the circumferential direction has a first inclined end surface that slopes toward the center of the first radial magnet in the circumferential direction as it extends radially inward. At least one of the other end surface of the first circumferential magnet in the circumferential direction or one end surface of the second circumferential magnet in the circumferential direction has a first contact inclined end surface that is in contact with the first inclined end surface and slopes toward the center of the first radial magnet in the circumferential direction as it extends radially inward.

## Description

### TECHNICAL FIELD

The present disclosure relates to a stator, a magnetic geared electrical machine, and a method of assembling a stator.

The present application claims priority based on Japanese Patent Application No. 2023-122922 filed on July 28, 2023, the entire content of which is incorporated herein by reference.

### BACKGROUND ART

The stator disclosed in Patent Document 1 is incorporated in a magnetic gear device. The stator includes a stator core, and a plurality of magnets disposed radially inward of the stator core and arranged in the circumferential direction.

### Citation List

### Patent Literature

Patent Document 1: US Patent Application Publication No. 2019/0157962

### SUMMARY

### Problems to be Solved

The present inventors have devised the application of a Halbach array which concentrates the magnetic flux radially inward of the stator to the magnet arrangement of the stator. However, there is concern that the magnets may come off from teeth of the stator core due to the different magnetization directions of circumferentially adjacent magnets. According to the inventor's knowledge, a radially magnetized magnet is subjected to a relatively large radially inward force, and the detachment of this magnet is of particular concern.

An object of the present disclosure is to provide a stator, a magnetic geared electrical machine, and a method of assembling a stator that can suppress the detachment of at least one of a plurality of magnets.

### Solution to the Problems

A stator according to at least one embodiment of the present disclose includes: a stator core including a plurality of teeth arranged at intervals in a circumferential direction with respect to an axis; and a plurality of magnets including a group of magnets disposed radially inward of the plurality of teeth and arranged continuously in the circumferential direction, the group of magnets being arranged in a Halbach array. The group of magnets includes: a first radial magnet magnetized radially outward; a first circumferential magnet disposed on one side of the first radial magnet in the circumferential direction and magnetized to the one side; and a second circumferential magnet disposed on the other side of the first radial magnet in the circumferential direction and magnetized to the other side. At least one of one end surface or the other end surface of the first radial magnet in the circumferential direction has a first inclined end surface that slopes toward the center of the first radial magnet in the circumferential direction as it extends radially inward. At least one of the other end surface of the first circumferential magnet in the circumferential direction or one end surface of the second circumferential magnet in the circumferential direction has a first contact inclined end surface that is in contact with the first inclined end surface and slopes toward the center of the first radial magnet in the circumferential direction as it extends radially inward.

A magnetic geared electrical machine according to an embodiment of the present disclosure includes: the above-described stator; a pole piece rotor including a plurality of pole pieces disposed radially inward of the stator and arranged in the circumferential direction; and a magnet rotor including an inner magnet disposed radially inward of the plurality of pole pieces.

A method of assembling a stator according to an embodiment of the present disclose is to assemble a stator that includes: a stator core including a plurality of teeth arranged at intervals in a circumferential direction with respect to an axis; a plurality of magnets including a group of magnets disposed radially inward of the plurality of teeth and arranged continuously in the circumferential direction, the group of magnets being arranged in a Halbach array; and a plurality of projections protruding radially inward with respect to the plurality of teeth and alternating with the plurality of magnets along the circumferential direction. The group of magnets includes: a first radial magnet magnetized radially outward; a first circumferential magnet disposed on one side of the first radial magnet in the circumferential direction and magnetized to the one side; and a second circumferential magnet disposed on the other side of the first radial magnet in the circumferential direction and magnetized to the other side. At least one of one end surface or the other end surface of the first radial magnet in the circumferential direction has a first inclined end surface that slopes toward the center of the first radial magnet in the circumferential direction as it extends radially inward. At least one of the other end surface of the first circumferential magnet in the circumferential direction or one end surface of the second circumferential magnet in the circumferential direction has a first contact inclined end surface that is in contact with the first inclined end surface and slopes toward the center of the first radial magnet in the circumferential direction as it extends radially inward. The method includes: a step of placing the first radial magnet between two of the projections arranged continuously in the circumferential direction; and a step of placing the first circumferential magnet and the second circumferential magnet between other two of the projections arranged continuously in the circumferential direction after the step of placing the first radial magnet.

### Advantageous Effects

The present disclosure provides a stator, a magnetic geared electrical machine, and a method of assembling a stator that can suppress the detachment of at least one of a plurality of magnets.

### BRIEF DESCRIPTION OF DRAWINGS

FIG. 1 is a schematic diagram of a magnetic geared electrical machine according to an embodiment.
FIG. 2 is a schematic diagram of a stator according to an embodiment.
FIG. 3 is a partial enlarged view of FIG. 2.
FIG. 4 is a schematic diagram showing force acting on a plurality of magnets according to an embodiment.
FIG. 5A is a schematic diagram of a plate according to the first embodiment.
FIG. 5B is a schematic diagram of a plate according to the second embodiment.
FIG. 5C is a schematic diagram of a plate according to the third embodiment.
FIG. 6 is a schematic diagram of a stator with a plate according to an embodiment.
FIG. 7 is a flowchart of a method of assembling a stator according to an embodiment.
FIG. 8 is a schematic diagram showing a step of placing a radial magnet according to an embodiment.
FIG. 9 is a schematic diagram showing a step of placing a circumferential magnet according to an embodiment.
FIG. 10 is a schematic diagram of a stator according to another embodiment (first example).
FIG. 11 is a schematic diagram showing a step of placing a radial magnet according to another embodiment (second example).
FIG. 12 is a schematic diagram of a stator according to another embodiment (second example).
FIG. 13 is a schematic diagram of a stator according to another embodiment (third example).
FIG. 14 is a schematic diagram of a stator according to another embodiment (fourth example).
FIG. 15 is a schematic diagram of a stator according to another embodiment (fifth example).

### DETAILED DESCRIPTION

Embodiments of the present disclosure will be described below with reference to the accompanying drawings. It is intended, however, that unless particularly identified, dimensions, materials, shapes, relative positions, and the like of components described in the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

The same configurations are indicated by the same reference signs and may not be described again in detail.

### <Overall configuration of magnetic geared electrical machine 10>

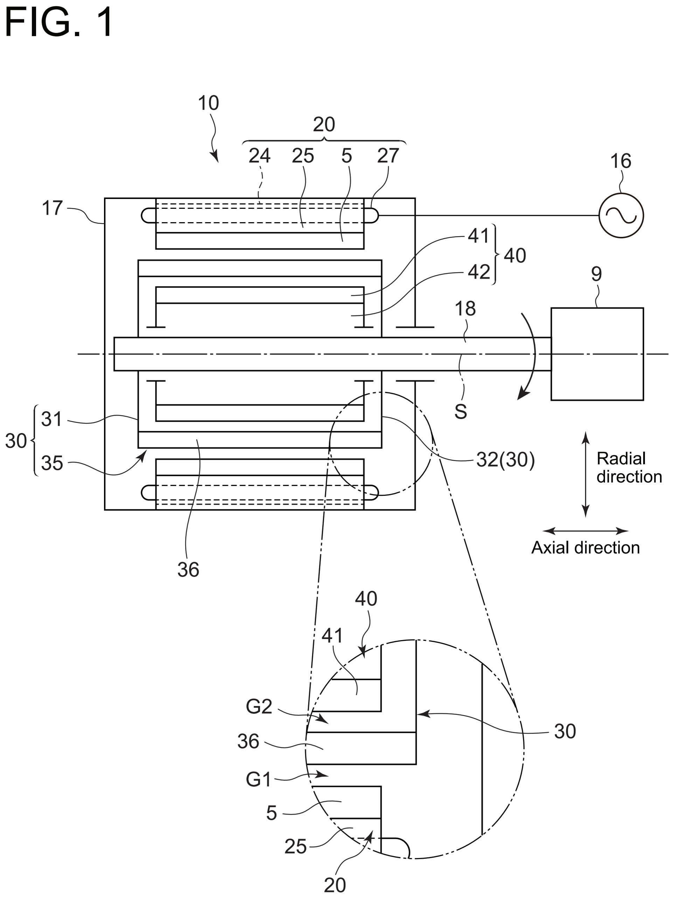

FIG. 1 is a schematic diagram of a magnetic geared electrical machine 10 according to an embodiment of the present disclosure. The magnetic geared electrical machine 10 includes a rotational shaft 18 connected to an external device 9. In the following description, "axial direction" or "axially" refers to the axial direction of the axis S of the rotational shaft 18, "circumferential direction" or "circumferentially" refers to the circumferential direction with respect to the axis S, and "radial direction" or "radially" refers to the radial direction with respect to the axis S. The term "radially inward" or "radially inner side" indicates the side toward the axis S, and the term "radially outward" or "radially outer side" indicates the side away from the axis S. The axis S coincides with the axis of a stator (stator 20) for the magnetic geared electrical machine 10, which will be described later.

The magnetic geared electrical machine 10 includes a housing 17 rotatably supporting the rotational shaft 18, and a stator 20 fixed to the housing 17.

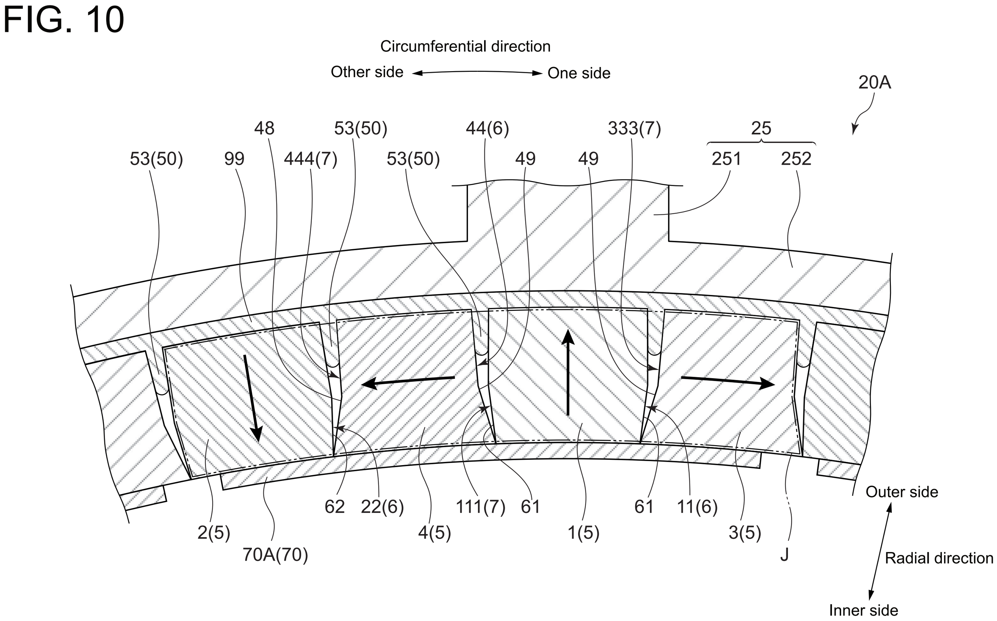

The stator 20 includes a stator core 24 extending in the circumferential direction, a plurality of teeth 25 protruding radially inward from the stator core 24, a stator coil 27 wound around the plurality of teeth 25, and a plurality of magnets 5 supported by the plurality of teeth 25. The stator coil 27 is electrically connected to an electric power system 16. In this example, the surface permanent magnet (SPM) configuration is used, in which the plurality of magnets 5 is arranged along the inner peripheral surface of the plurality of teeth 25. The SPM configuration of the stator 20 may be as shown in FIG. 1, in which the magnets 5 are directly attached to the inner peripheral surface of the teeth 25, or the magnets 5 may be attached to the inner peripheral surface of the teeth 25 via another member (see FIG. 10).

The magnetic geared electrical machine 10 shown in FIG. 1 further includes a pole piece rotor 30. The pole piece rotor 30 includes an annular body 35 disposed radially inward of the stator 20 and extending along the axis S, a connection member 31 connecting one end of the annular body 35 to the rotational shaft 18, and a connection member 32 connecting the other end of the annular body 35 to the rotational shaft 18. The annular body 35 faces the plurality of magnets 5 with an outer air gap G1 therebetween in the radial direction. The annular body 35 includes a plurality of pole pieces 36 and a plurality of non-magnetic bodies (not shown) arranged alternately along the circumferential direction. The connection members 31, 32 extend along the radial direction. The connection members 31, 32 in the example of FIG. 1 are fixed to the rotational shaft 18, and the pole piece rotor 30 is configured to rotate integrally with the rotational shaft 18. Each pole piece 36 may be a plurality of electromagnetic steel sheets laminated in the axial direction, or at least one powder magnetic core extending in the axial direction, or a combination thereof.

The magnetic geared electrical machine 10 further includes a magnet rotor 40 connected to the rotational shaft 18 between the connection members 31, 32. The magnet rotor 40 includes a plurality of inner magnets 41 disposed radially inward of the annular body 35 and arranged in the circumferential direction, and a rotor core 42 that supports the inner magnets 41. The rotor core 42 is connected to the rotational shaft 18 via a bearing, and the magnet rotor 40 is configured to rotate relative to the rotational shaft 18. The magnet rotor 40 faces the annular body 35 with an inner air gap G2 therebetween in the radial direction. In the example of FIG. 1, the SPM configuration is used, in which the plurality of inner magnets 41 is arranged along the outer peripheral surface of the rotor core 42, but the interior permanent magnet (IPM) configuration may be used, in which the plurality of inner magnets 41 is provided inside the rotor core 42.

The magnetic geared electrical machine 10 according to an embodiment is a magnetic geared motor configured to drive the external device 9 upon receiving electric power supplied from the electric power system 16, the operation principle is as follows: The magnet rotor 40 rotates by a rotating magnetic field generated by energization of the stator coil 27. The positional relationship of the annular body 35 relative to the plurality of inner magnets 41 and the plurality of magnets 5 changes in the circumferential direction, the magnetic flux between the magnet rotor 40 and the stator 20 is modulated, and the pole piece rotor 30 rotates. Torque is transmitted from the rotational shaft 18, which rotates together with the pole piece rotor 30, to the external device 9, so that the external device 9 is driven.

The magnetic geared electrical machine 10 according to another embodiment is a magnetic geared generator configured to obtain power from the external device 9 and supply electric power to the electric power system 16, the operation principle is as follows: The pole piece rotor 30 rotates together with the rotational shaft 18 as the external device 9 drives the rotational shaft 18. The positional relationship of the annular body 35 relative to the plurality of inner magnets 41 and the plurality of magnets 5 changes in the circumferential direction, and the magnet rotor 40 rotates. The electromagnetic induction caused by the rotation of the pole piece rotor 30 and the magnet rotor 40 generates a current in the stator coil 27, so that electric power is supplied to the electric power system 16.

NL = NH + NS holds, where NL is the number of magnetic poles of the pole pieces 36, NH is the number of pairs of magnetic poles (pole pairs) of the inner magnets 41, and NS is the number of pairs of magnetic poles (pole pairs) of the magnets 5. If this relationship holds, the ratio of the number of rotations of the magnet rotor 40 to the pole piece rotor 30 is expressed as NL/NH. In this example, NL/NH is greater than 1, meaning that the magnet rotor 40 functions as a high-speed rotor and the pole piece rotor 30 functions as a low-speed rotor. The number of magnetic poles NL of the pole pieces 36 is smaller than the number of pole pairs NS of the magnets 5.

The magnetic geared electrical machine 10 of the present disclosure is not limited to the above-described embodiments. The external device 9 may be connected to a power transmission shaft (not shown) that is disposed coaxially with the rotational shaft 18. The power transmission shaft and the rotational shaft 18 are not coupled with each other. In this case, the connection member 31 is connected to the rotational shaft 18 via a bearing, while the connection member 32 is fixed to the power transmission shaft. Further, the rotor core 42 of the magnet rotor 40 is fixed to the rotational shaft 18. This allows the magnet rotor 40 to rotate integrally with the rotational shaft 18 and the pole piece rotor 30 to rotate relative to the rotational shaft 18.

### <Basic configuration of stator 20>

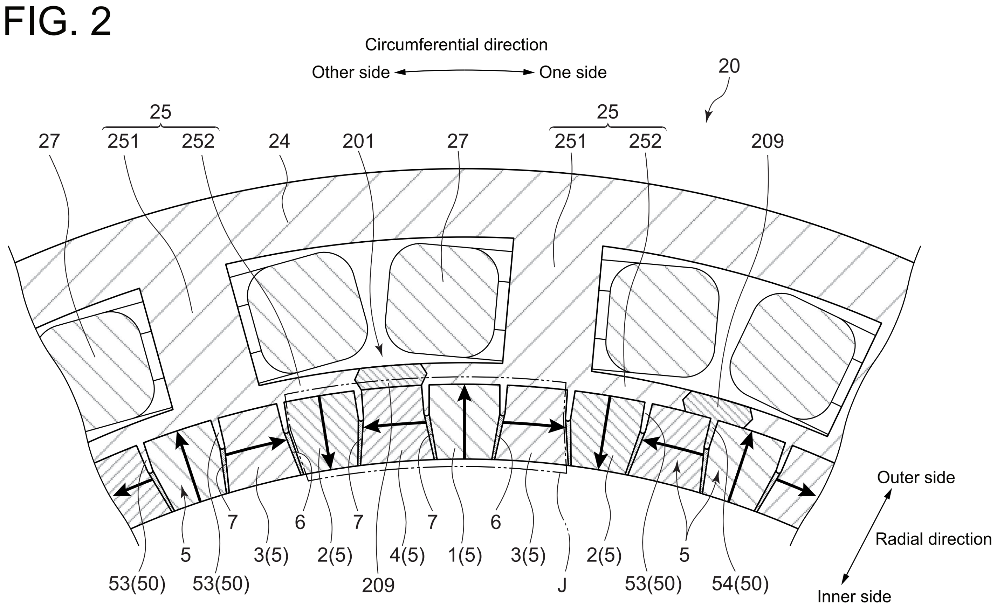

FIG. 2 is a schematic diagram of the stator 20 according to an embodiment of the present disclosure. The stator 20 includes a stator core 24 of cylindrical shape along the axial direction, a plurality of teeth 25 disposed radially inward of the stator core 24 and arranged at intervals in the circumferential direction, and a stator coil 27 disposed around the plurality of teeth 25.

All the teeth 25 extend in the axial direction. Each tooth 25 has a protruding portion 251 protruding radially inward from the stator core 24 and a tip portion 252 connected to the tip of the protruding portion 251. The stator core 24, the protruding portion 251, and the tip portion 252 are integrally formed of the same soft magnetic material. In the circumferential direction, the protruding portion 251 is shorter than the tip portion 252. The stator coil 27 is wound around the protruding portion 251. A slot opening 201 is formed as a space between two circumferentially adjacent tip portions 252, and a retaining member 209, which may be formed of, for example, resin material, is disposed in the slot opening 201. The retaining member 209 is held by the circumferential ends of the two tip portions 252.

The stator 20 further includes a plurality of projections 50 protruding radially inward with respect to the plurality of teeth 25. The projections 50 illustrated in FIG. 2 include a projection 53 protruding radially inward from the tip portion 252 of the tooth 25 and a projection 54 protruding radially inward from the retaining member 209. The projection 53 and the tip portion 252 are integrally formed of the same soft magnetic material, and the projection 54 and the retaining member 209 are integrally formed of the same soft magnetic material. The projections 53, 54 have the same shape. The projections 50 may not include the projection 54, and the plurality of projections 50 may be composed of only a plurality of projections 53. In the following description, the projections 53, 54 may collectively be referred to as "projections 50" without distinguishing one from the other.

The stator 20 further includes a plurality of magnets 5 alternating with the plurality of projections 50 along the circumferential direction. The plurality of magnets 5 is arranged radially inward of the plurality of teeth 25, and each magnet 5 is interposed between two circumferentially adjacent projections 50 of the plurality of projections 50.

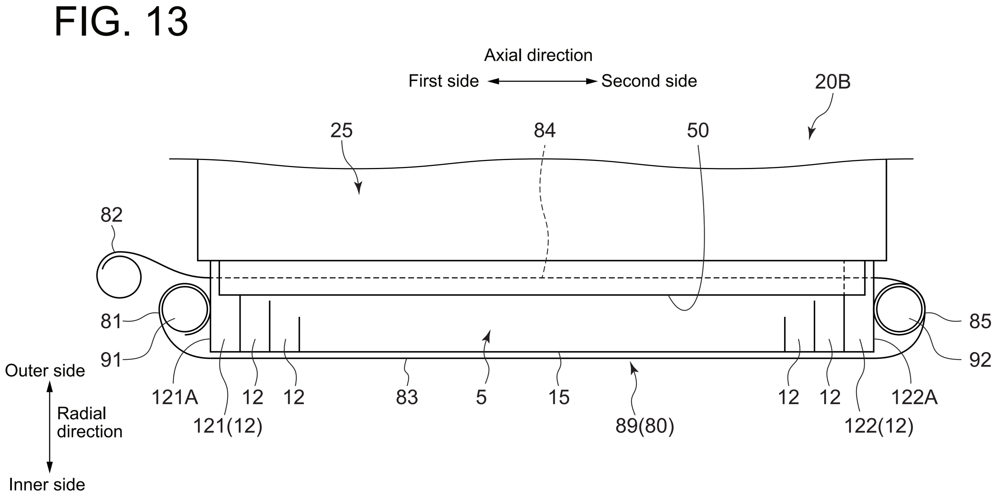

The plurality of magnets 5 includes a group of magnets arranged continuously in the circumferential direction (e.g., four magnets 5 arranged continuously in the circumferential direction) in a Halbach array. This Halbach array strengthens the magnetic flux from the magnets 5 on the radially inner side of the plurality of magnets 5 rather than on the radially outer side. The stator 20 of the present embodiment employs a configuration with a plurality of such groups of magnets. In FIG. 2, the four magnets 5 included in one magnet group are surrounded by the dashed two-dotted line J. Each magnet 5 extending along the axial direction is composed of a plurality of axially stacked permanent magnets 12 (see FIG. 13). Herein, such a magnet 5 (see FIG. 2) extending along the axial direction is counted as one magnet for the sake of explanation.

In the following description, the Halbach-arrayed magnet group may also be referred to as "four magnets 5". The end surface of the magnet 5 on one side in the circumferential direction is referred to as "one end surface 6", and the end surface of the magnet 5 on the other side in the circumferential direction is referred to as "the other end surface 7". In the example of FIG. 2, the clockwise side is one side, and the counterclockwise side is the other side. Although not illustrated, the counterclockwise side may be one side and the clockwise side the other side.

The four magnets 5 in a Halbach array include a first radial magnet 1 magnetized radially outward, a first circumferential magnet 3 magnetized to one side in the circumferential direction, a second circumferential magnet 4 magnetized to the other side in the circumferential direction, and a second radial magnet 2 magnetized radially inward. The first circumferential magnet 3 is disposed on one side of the first radial magnet 1 in the circumferential direction, the second circumferential magnet 4 is disposed on the other side of the first radial magnet 1 in the circumferential direction, and the second radial magnet 2 is disposed on the other side of the second circumferential magnet 4 in the circumferential direction. The magnetization directions of these four magnets 5 are indicated by thick arrows for each magnet 5, and the end of each magnet 5 on the side toward which the arrow points is the N pole. In this example, the respective magnetization components of the first radial magnet 1 and the second radial magnet 2 include only radial components and not circumferential components. The respective magnetization components of the first circumferential magnet 3 and the second circumferential magnet 4 include only circumferential components and not radial components. However, the present disclosure is not limited thereto, and the respective magnetization components of the first circumferential magnet 3 and the second circumferential magnet 4 may include radial components in addition to circumferential components (details will be described below).

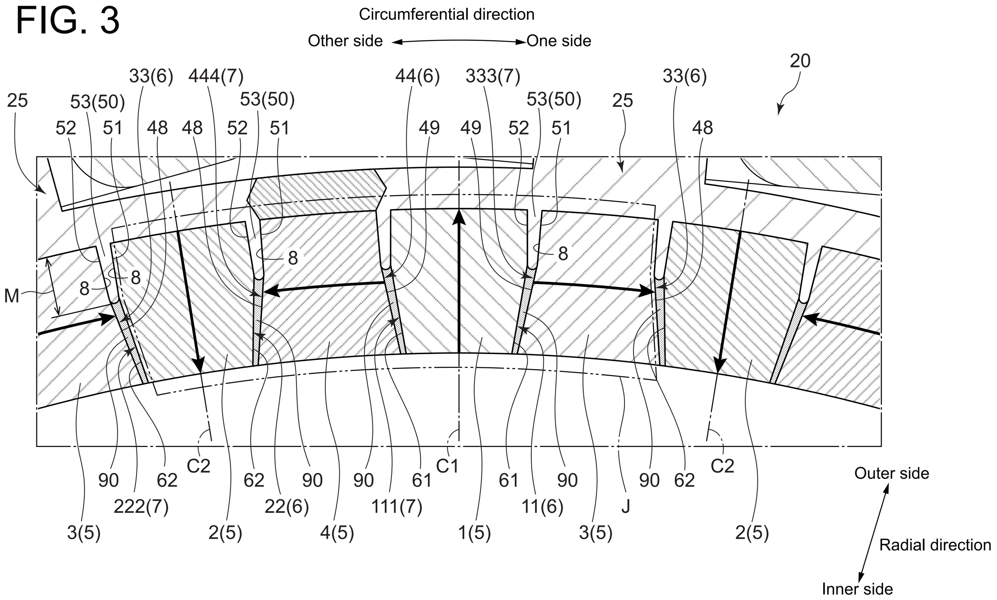

FIG. 3 is a partial enlarged view of FIG. 2. At least one of one end surface 11 (6) or the other end surface 111 (7) of the first radial magnet 1 (magnet 5) has a first inclined end surface 61. The first inclined end surface 61 slopes toward the center C1 of the first radial magnet 1 in the circumferential direction as it extends radially inward. In the example of FIG. 3, each of one end surface 11 and the other end surface 111 has the first inclined end surface 61. As a more specific example, the first radial magnet 1 is symmetrical in the circumferential direction. In other words, at least a part of the first radial magnet 1 has a shape such that the circumferential length decreases toward the radially inner side.

One end surface 22 (6) of the second radial magnet 2 (magnet 5) has a second inclined end surface 62. The second inclined end surface 62 slopes toward the center C2 of the second radial magnet 2 in the circumferential direction as it extends radially inward. As a more specific example, the second radial magnet 2 is symmetrical in the circumferential direction. In other words, the other end surface 222 (7) of the second radial magnet 2 (magnet 5) also has the second inclined end surface 62, and at least a part of the second radial magnet 2 has a shape such that the circumferential length decreases toward the radially inner side. The inclination angle (acute angle) of the second inclined end surface 62 with respect to the radial direction is the same as that of the first inclined end surface 61 with respect to the radial direction. In this example, the second radial magnet 2 has the same shape as the first radial magnet 1 in axial view.

The other end surface 333 (7) of the first circumferential magnet 3 (magnet 5) is circumferentially adjacent to one end surface 11 of the first radial magnet 1, and one end surface 44 (6) of the second circumferential magnet 4 (magnet 5) is circumferentially adjacent to the other end surface 111 of the first radial magnet 1. Further, at least one of the other end surface 333 of the first circumferential magnet 3 or one end surface 44 of the second circumferential magnet 4 has a first contact inclined end surface 49. The first contact inclined end surface 49 slopes toward the center C1 of the first radial magnet 1 as it extends radially inward. In the example of FIG. 3, each of the other end surface 333 and one end surface 44 has the first contact inclined end surface 49.

The other end surface 444 (7) of the second circumferential magnet 4 (magnet 5) has a second contact inclined end surface 48. The second contact inclined end surface 48 slopes toward the center C2 of the second radial magnet 2 as it extends radially inward. The second circumferential magnet 4 is symmetrical in the circumferential direction, and the inclination angle (acute angle) of the second contact inclined end surface 48 with respect to the radial direction is the same as that of the first contact inclined end surface 49 with respect to the radial direction.

One end surface 33 (6) of the first circumferential magnet 3 (magnet 5) also has the second contact inclined end surface 48. The second contact inclined end surface 48 of the first circumferential magnet 3 slopes toward the center C2 of the second radial magnet 2 that is located on one side of the first circumferential magnet 3 in the circumferential direction as it extends radially inward. In this example, the first circumferential magnet 3 has the same shape as the second circumferential magnet 4 in axial view.

Although not an essential component of the present disclosure, the stator 20 illustrated in FIG. 3 has a plurality of intermediate members 90 disposed radially inward of the plurality of projections 50. Each intermediate member 90 is interposed between two circumferentially adjacent magnets 5 of the plurality of magnets 5. That is, the first contact inclined end surface 49 in the illustrated example is indirect contact with the first inclined end surface 61 of the first radial magnet 1 via the intermediate member 90. Further, the second contact inclined end surface 48 is in indirect contact with the second inclined end surface 62 of the second radial magnet 2 via the intermediate member 90.

The intermediate member 90 is a plate-like member extending in the axial direction. In some embodiments, the radially outer end of the intermediate member 90 is in contact with the radially inner end of the projection 50. The intermediate member 90 is preferably formed of an insulating material. The intermediate member 90 may be an adhesive or a resin member.

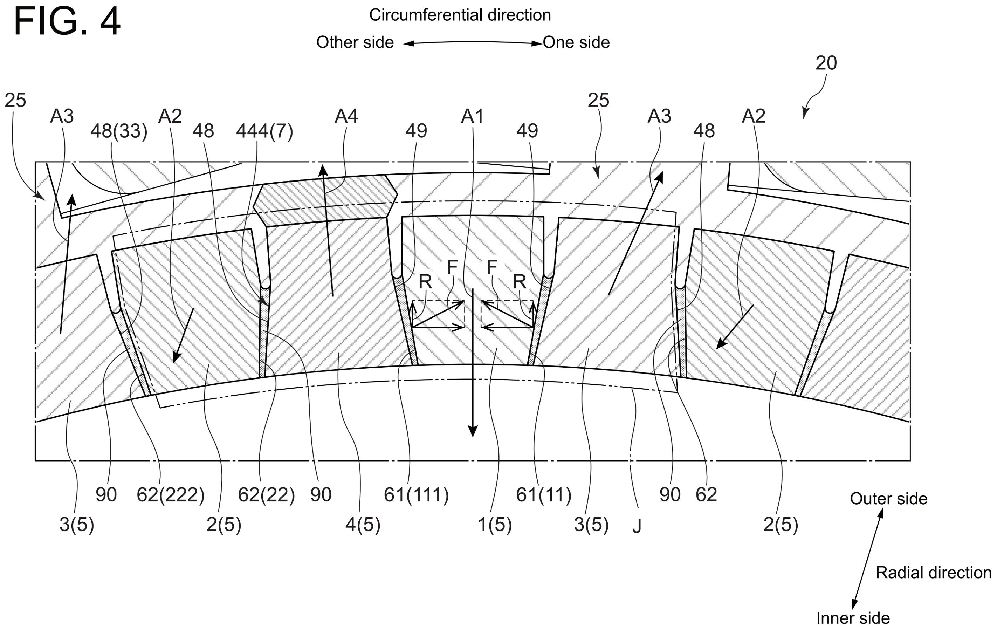

FIG. 4 is a schematic diagram showing force acting on the plurality of magnets 5 according to an embodiment of the present disclosure. Arrows A1 to A4 indicate the magnetic forces that each magnet 5 receives due to the magnetic flux of the other magnet 5. More specifically, arrow A1 indicates the magnitude and direction of the magnetic force received by the first radial magnet 1. Similarly, arrow A2 indicates the direction and magnitude of the magnetic force received by the second radial magnet 2, arrow A3 indicates the direction and magnitude of the magnetic force received by the first circumferential magnet 3, and arrow A4 indicates the direction and magnitude of the magnetic force received by the second circumferential magnet 4. The lengths of arrows A1 to A4 indicate the magnitude of the magnetic forces. The direction and magnitude of the magnetic forces can be identified by simulation. As seen in the drawing, the first radial magnet 1 has the largest radially inward magnetic force, and the risk of the first radial magnet 1 coming off from the teeth 25 is higher than the risk of the other magnets 5 coming off from the teeth 25.

In this regard, with the configuration where the first contact inclined end surface 49 is in indirect contact with the first inclined end surface 61 via the intermediate member 90, the force F acting from the first contact inclined end surface 49 to the first inclined end surface 61 includes a radially outward component force R. The force R acts to prevent the first radial magnet 1 from coming off from the teeth 25. Thus, it is possible to achieve a stator 20 that can suppress the detachment of at least one of the plurality of magnets 5.

Of one end surface 11 and the other end surface 111 of the first radial magnet 1, the other end surface 111 may not have the first inclined end surface 61. In this case, one end surface 44 of the second circumferential magnet 4 does not have the first contact inclined end surface 49. Alternatively, one end surface 11 may not have the first inclined end surface 61. In this case, the other end surface 333 of the first circumferential magnet 3 does not have the first contact inclined end surface 49. Also, the second radial magnet 2 may not have the second inclined end surface 62. Further, the stator 20 may not include the intermediate members 90 (details will be described later). In any embodiments, the radially directed force R generated by the contact between the first contact inclined end surface 49 and the first inclined end surface 61 acts on the first radial magnet 1, providing the advantages described above.

Additionally, with the configuration where each of one end surface 11 and the other end surface 111 of the first radial magnet 1 has the first inclined end surface 61, and each of the first circumferential magnet 3 and the second circumferential magnet 4 has the first contact inclined end surface 49, the radially outward force R is generated at each of the one end surface 11 and the other end surface 111, further preventing the first radial magnet 1 from coming off from the teeth 25.

As indicated by arrow A2 in FIG. 4, the second radial magnet 2 also has a radially inward magnetic force. In this regard, with the configuration where the second contact inclined end surface 48 is in indirect contact with the second inclined end surface 62 via the intermediate member 90, a radially outward force (not shown) acts on the second radial magnet 2. This prevents the second radial magnet 2 from coming off from the teeth 25. Thus, it is possible to achieve a stator 20 that can suppress the detachment of the plurality of magnets 5.

Additionally, with the configuration where the other end surface 222 of the second radial magnet 2 has the second inclined end surface 62, and the first circumferential magnet 3 that is located on the other side of the second radial magnet 2 in the circumferential direction has the second contact inclined end surface 48, the radially outward force is generated at each of one end surface 22 and the other end surface 222. This further prevents the second radial magnet 2 from coming off from the teeth 25.

Additionally, with the configuration where the stator 20 includes the plurality of intermediate members 90, since the intermediate member 90 is interposed between two adjacent magnets 5, the dispersion of force transmitted from one of the two adjacent magnets 5 to the other can be reduced. As a more specific example, the intermediate member 90 ensures stable surface contact between the first contact inclined end surface 49 and the first inclined end surface 61, reducing the dispersion of force F exerted from the first contact inclined end surface 49 to the first inclined end surface 61. This increases the radially directed force R acting on the first radial magnet 1 and prevents the first radial magnet 1 from coming off from the plurality of teeth 25. Thus, it is possible to further suppress the detachment of the plurality of magnets 5.

### <Relationship between projection 50 and magnet 5>

Referring to FIG. 3 again, each projection 50 includes a first end surface 51 and a second end surface 52 which are opposite end surfaces in the circumferential direction. Both one end surface 6 and the other end surface 7 of each magnet 5 have projection contact surfaces 8 that are in contact with the projections 50. The projection contact surfaces 8 are located radially outward of the first inclined end surface 61 and the first contact inclined end surface 49. More specifically, the projection contact surfaces 8 are located radially outward of the first inclined end surface 61, the second inclined end surface 62, the first contact inclined end surface 49, and the second contact inclined end surface 48. In the example of FIG. 3, the two projection contact surfaces 8 of each magnet 5 are in contact with the second end surface 52 of the projection 50 on one side and the first end surface 51 of the projection 50 on the other side. Thus, each magnet 5 is sandwiched between two projections 50. The intermediate member 90 may be interposed between each magnet 5 and the projections 50.

In the example of FIG. 3, the radial length (dimension M) of each projection 50 is not more than half the radial length of each of the plurality of magnets 5, more specifically not more than one-third, more particularly not more than one-fourth. Further, the radial length of each projection 50 is not less than one-fifth the radial length of each magnet 5. Additionally, in this example, the circumferential length (maximum circumferential length) of each projection 50 is not more than one-fourth the radial length of each projection 50.

With the configuration where the dimension M is not more than half the radial length of each magnet 5, the radial length of each projection 50 can be shortened. As a result, each of the magnets 5 can be moved from the radially inner side into a predetermined assembly position between two projections 50 in the process of assembling the stator 20 (details of assembling method will be described later). Conventionally, the magnets 5 must be slid in the axial direction into a predetermined assembly position between two fingers (not shown herein). However, since the fingers and magnets 5 generally have an elongated shape in the axial direction, the magnets 5 must be slid a long distance, which takes more time and effort in the process of assembling the magnets 5. In this regard, with the above configuration, each magnet 5 can be moved in the radial direction, reducing the required movement of the magnet 5 and improving the assembly of the stator 20.

In the example of FIG. 3, the first end surface 51 and the second end surface 52 extend in the radial direction. In other words, the first end surface 51 and the second end surface 52 are planes parallel to the radial direction. With the above configuration, since the first end surface 51 and the second end surface 52 extend in the radial direction, the projections 50 have a shape such that the circumferential length decreases toward the radially inner side, making it easy to move the magnets 5 from the radially outer side into a predetermined assembly position. As a result, the process of assembling the magnets 5 is further facilitated.

In the example of FIG. 3, the projection contact surfaces 8 of each magnet 5 are planes extending in the radial direction. In other words, the projection contact surfaces 8 are parallel to the radial direction. With the above configuration, the projection contact surfaces 8 are in contact with the projections 50 over a wider radial range. As a result, each magnet 5 is firmly sandwiched between two projections 50 even though the radial length of the projections 50 is short. Thus, it is possible to achieve a stator 20 that suppresses the detachment of the plurality of magnets 5. Further, even though at least one of the first circumferential magnet 3 or the second circumferential magnet 4 has the first contact inclined end surface 49, and the circumferential magnet has a shape such that the circumferential length increases toward the radially inner side, the projection contact surfaces 8 extending in the radial direction make it easier to move the circumferential magnet into a predetermined assembly position between two projections 50. As a result, the process of assembling the stator 20 is further facilitated.

In the example of FIG. 3, the radial length of the projection contact surfaces 8 is not more than half the radial length of each magnet 5, more specifically not more than one-third, more particularly not more than one-fourth. With the above configuration, the distance that the projection contact surface 8 moves in the radial direction while sliding against the projection 50 in the magnet assembly process can be shortened, further facilitating the process of assembling the stator 20.

### <Plate 70>

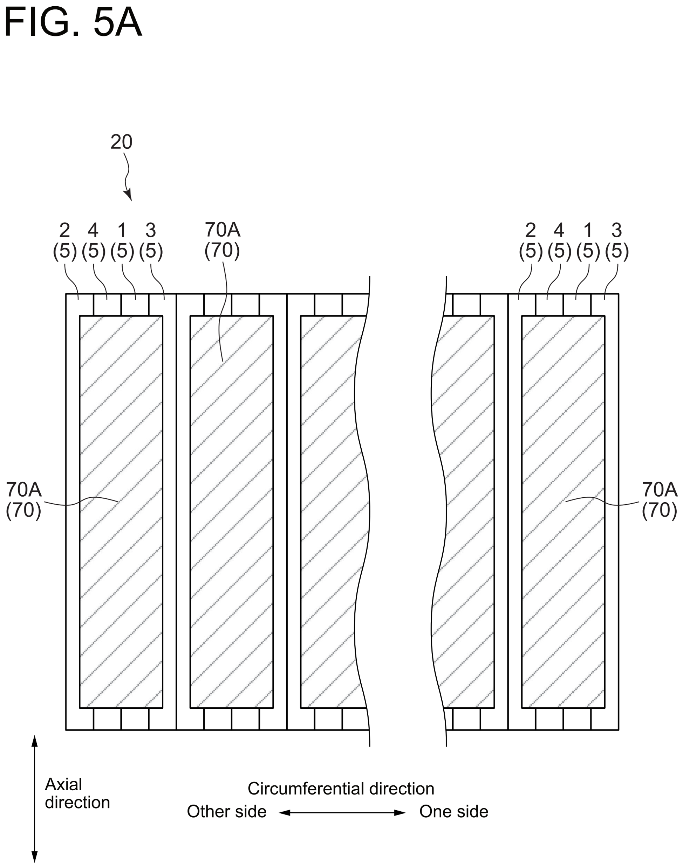

FIGs. 5A to 5C are schematic diagrams of the plurality of magnets 5. In FIGs. 5A to 5C, the circumferential direction is illustrated linearly, and the leftmost and rightmost magnets 5 are adjacent to each other in the circumferential direction. In FIGs. 5A to 5C, the front side of the paper is the radially inner side, and the back side of the paper is the radially outer side. FIGs. 5A to 5C schematically show a plate 70A (70) according to the first embodiment, a plate 70B (70) according to the second embodiment, and a plate 70C (70) according to the third embodiment, respectively.

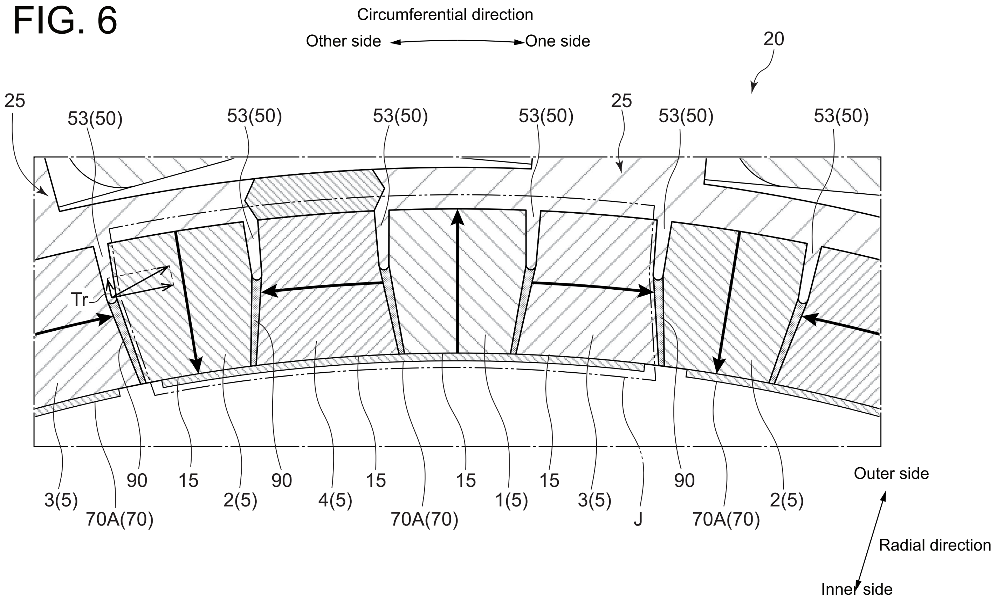

As shown in FIGs. 5A to 5C, the plate 70A to 70C (70) extends in the circumferential direction. Further, the plate 70A to 70C (70) is attached to the inner peripheral surfaces 15 (see FIG. 6) of two or more magnets 5 that are arranged continuously in the circumferential direction, for example by an adhesive. The two or more magnets 5 arranged continuously include the first radial magnet 1. The plate 70A to 70C (70) is formed of a non-magnetic material. This prevents eddy currents from flowing through the plate 70, reducing the iron loss of the stator 20. Further, the plate 70 is preferably non-magnetic and nonconductive material. Examples of such material include glass fiber reinforced plastics (GFRP), carbon fiber reinforced plastics (CFRP), or heat-resistant resins.

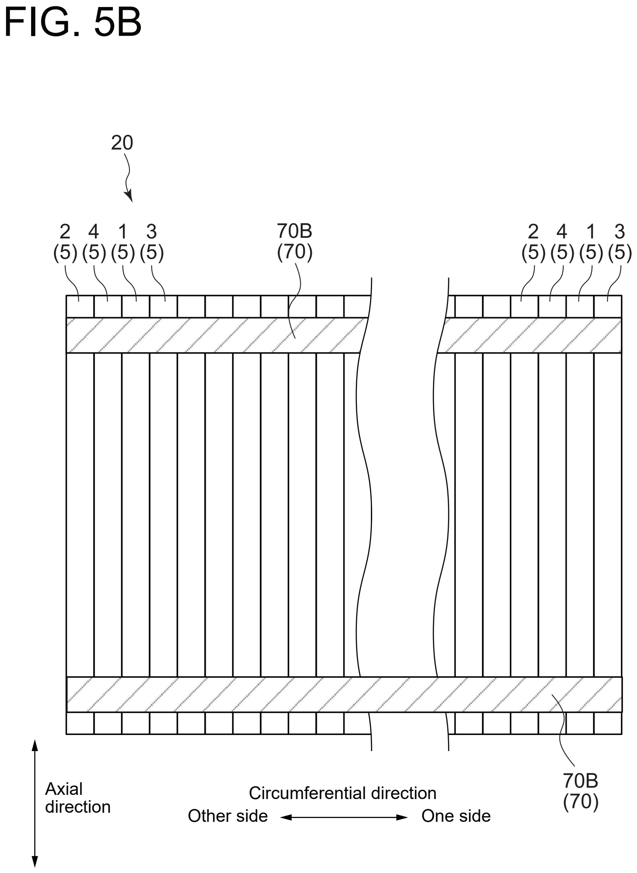

In the example of FIG. 5A, a plurality of plates 70A are arranged at equal intervals along the circumferential direction. The magnets 5 to which each plate 70A is attached include the first radial magnet 1 and the second radial magnet 2. In the illustrated example, the number of magnets 5 to which the plate 70A is attached is four or more, more specifically four. The plate 70B shown in FIG. 5B is attached to the inner peripheral surfaces 15 of the plurality of magnets 5 along the entire circumferential length of the stator core 24 (see FIG. 2). In other words, the plate 70B is a single cylindrical member attached to the inner peripheral surfaces 15 of all the magnets 5 constituting the stator 20. In the illustrated example, two plates 70B are attached to opposite ends of the magnets 5 in the axial direction. One of the plates 70B may be arranged so that one axial end of the magnets 5 is aligned with one axial end of the plate 70B. Similarly, the other plate 70B may be arranged so that the other axial end of the magnets 5 is aligned with the other axial end of the plate 70B.

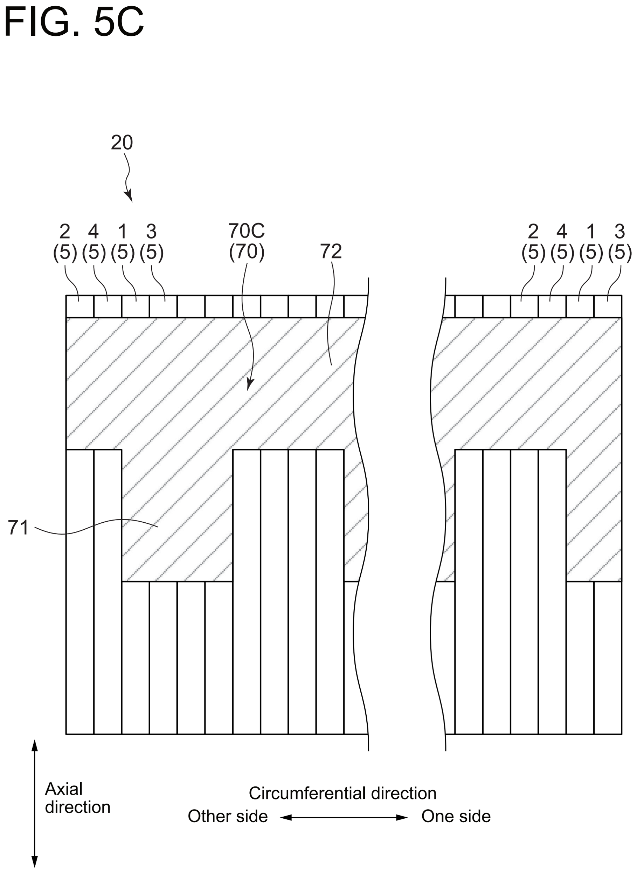

The plate 70C shown in FIG. 5C includes a first plate part 71 attached to the two or more magnets 5, and a second plate part 72 longer than the first plate part 71 in the circumferential direction. The first plate part 71 and the second plate part 72 are integrally formed, and the second plate part 72 is connected to one axial end of the first plate part 71. The number of magnets 5 to which the second plate part 72 is attached is greater than the number of magnets 5 to which the first plate part 71 is attached. More specifically, the magnets 5 to which the second plate part 72 is attached include the magnets 5 to which the first plate part 71 is attached and at least one other magnet 5. In the illustrated example, the second plate part 72 is attached to all the magnets 5 constituting the stator 20, and the number of magnets 5 to which the first plate part 71 is attached is four. In the illustrated example, a plurality of first plate parts 71 are arranged at equal intervals along the circumferential direction. The number of first plate parts 71 is not limited to two or more as shown in FIG. 5C, but may be one. Alternatively, the number of plates 70C is not limited to one, but may be two or more. In this case, a plurality of second plate parts 72 are arranged at equal intervals in the circumferential direction, and a plurality of first plate parts 71 are connected to each second plate part 72.

FIG. 6 is a schematic diagram of the stator 20 with the plate 70A. The plate 70A shown in FIG. 6 is attached to four magnets 5 (i.e., first radial magnet 1, second radial magnet 2, first circumferential magnet 3, and second circumferential magnet 4) in a Halbach array to integrate the four magnets 5.

The advantages obtained by the configuration where the stator 20 is equipped with the plate 70A will now be described. The angle between the protruding direction of the projection 50 and the horizontal direction tends to vary among the plurality of projections 50. The smaller the angle between the protruding direction and the horizontal direction, the greater the radially outward force acting on the magnets 5 from the projection 50. The greater this force, the more effective to prevent the magnet 5 from coming off.

Referring to FIG. 6 for a specific example, among the five projections 50 that are in contact with any of the four magnets 5 integrated by the plate 70A attached, the angle between the horizontal direction and the protruding direction of the projection 50 located on the other side of the second radial magnet 2 in the circumferential direction is the smallest. The radially outward force Tr acting on the magnets 5 from this projection 50 is larger than the radially outward forces (not shown) acting from the other four projections 50 and contributes significantly to preventing the magnets 5 from coming off (suppressing the detachment).

With the configuration where the stator 20 is equipped with the plate 70A (70), since the four magnets 5 are integrated by the plate 70A, the projection 50 in FIG. 6 that generates the force Tr contribute significantly to suppressing the detachment of not only the second radial magnet 2 but also the other three magnets 5. Thus, it is possible to achieve a stator 20 that can further suppress the detachment of the plurality of magnets 5. The protruding direction of the projection 50 is parallel to the radial direction.

By the same principle, the above advantages can be obtained when the plate 70B or 70C is used instead of the plate 70A. For example, when the plate 70B is applied, all the magnets 5 constituting the stator 20 are integrated by the attached plate 70B to suppress the detachment of the magnets 5.

Further, with the configuration where the magnets 5 to which the plate 70A is attached include the first radial magnet 1 and the second radial magnet 2, since the plate 70A is attached to the plurality of magnets 5, including the first radial magnet 1 and the second radial magnet 2, which are two magnets 5 with relatively high risk of detachment, the detachment of the plurality of magnets 5 can be suppressed more reliably.

Further, with the configuration where the plate 70C includes the first plate part 71 and the second plate part 72, the second plate part 72 can be attached to the position where the temperature rise is moderate, and the first plate part 71 can be attached to the position where the temperature rise is rapid. This suppresses the detachment of the integrated magnets 5 and also reduces damage to the plate 70C caused by thermal deformation.

### <Method of assembling stator 20>

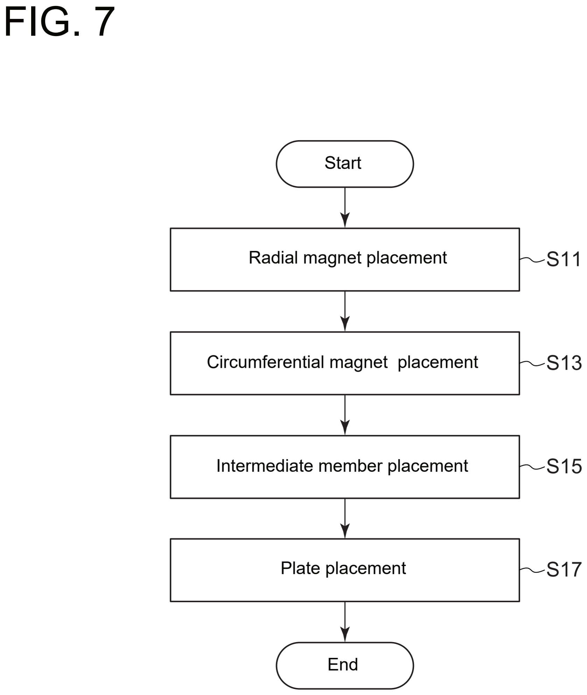

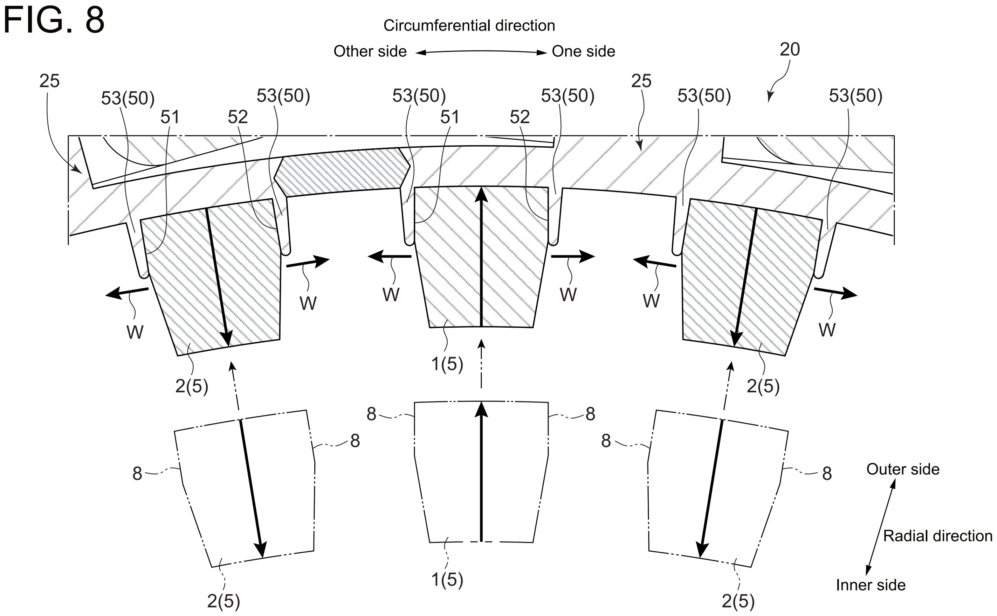

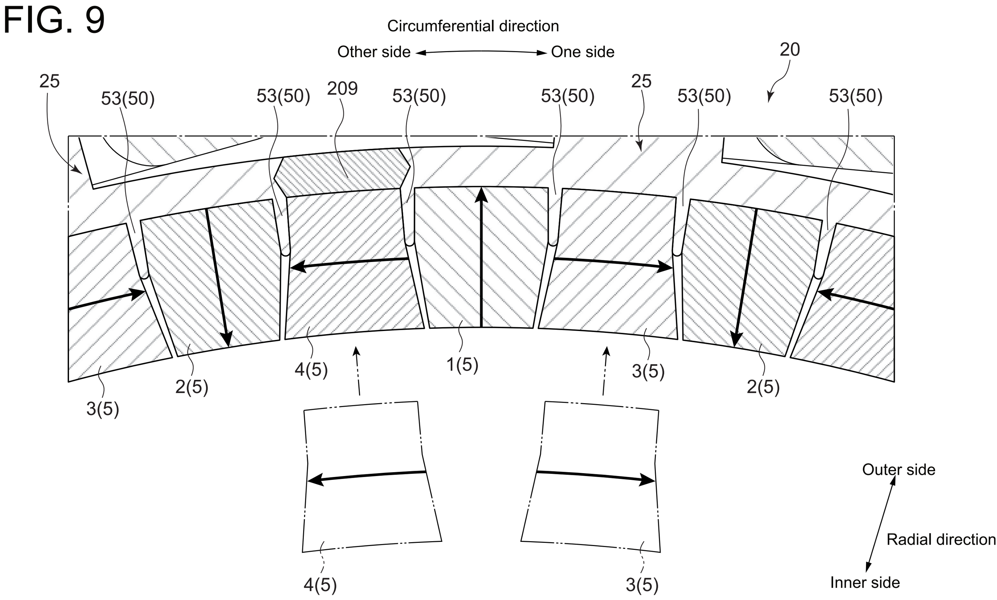

With reference to FIGs. 6 to 9, a method of assembling the stator 20 will be described. In the following description, "step" may be abbreviated as "S". FIG. 7 is a flowchart of the method of assembling the stator 20 according to an embodiment of the present disclosure. FIG. 8 is a schematic diagram showing a step (S11) of placing a radial magnet according to an embodiment of the present disclosure. FIG. 9 is a schematic diagram showing a step (S13) of placing a circumferential magnet according to an embodiment of the present disclosure. The assembling may be performed by the operator, a robot arm operated by the operator, or a combination thereof. At the start of assembly, the retaining member 209 is already in place (see FIG. 9).

First, a radial magnet placement step (S11) is performed to place the first radial magnet 1 and the second radial magnet 2 between any two projections 50 that are arranged continuously in the circumferential direction. As shown in FIG. 8, each of the first radial magnet 1 and the second radial magnet 2 is moved into a predetermined assembly position between two projections 50 from the inner side to the outer side in the radial direction. In the example of FIG. 8, when the first radial magnet 1 is moved, the two projection contact surfaces 8 slide against the second end surface 52 of the projection 50 on one side and the first end surface 51 of the projection 50 on the other side, respectively. The first radial magnet 1 then reaches the predetermined assembly position. Similarly, when the second radial magnet 2 is moved, the two projection contact surfaces 8 slide against the first end surface 51 and the second end surface 52, respectively, and the second radial magnet 2 reaches the predetermined assembly position.

During the execution of S11, the first radial magnet 1 and the second radial magnet 2 that have reached the assembly position are subjected to magnetic forces bringing them close to each other in the circumferential direction (arrow W). This is because the radially inner end of the first radial magnet 1 has an S pole, and the inner end of the second radial magnet 2 has an N pole. Also, the outer end of the first radial magnet 1 has an N pole, and the outer end of the second radial magnet 2 has an S pole. As a result, each projection 50 receives a circumferential force from the first radial magnet 1 and the second radial magnet 2. In this regard, with the configuration where the radial length of the projections 50 is not more than half the radial length of the magnets 5, the bending moment generated at the projections 50 can be reduced, and damage to the projections 50 can be reduced.

Once S11 is completed (i.e., once the first radial magnets 1 and second radial magnets 2 are placed at equal intervals over the entire circumferential length of the stator 20), the bending moment generated at each projection 50 almost disappears. This is because the magnetic forces of the first radial magnet 1 and the second radial magnet 2 cancel each other in the circumferential direction.

After completion of S11, an assembly jig (not shown) may be temporarily placed to fix the first radial magnet 1 and the second radial magnet 2 in the assembly position. In one example, the assembly jig presses the first radial magnet 1 and the second radial magnet 2 from the inner side to the outer side in the radial direction.

Next, a circumferential magnet placement step (S13) is performed to place the first circumferential magnet 3 and the second circumferential magnet 4 between other two projections 50 that are arranged continuously in the circumferential direction. As shown in FIG. 9, each of the first circumferential magnet 3 and the second circumferential magnet 4 is moved into a predetermined assembly position between two projections 50 from the inner side to the outer side in the radial direction. The details are the same as in S11.

Then, an intermediate member placement step (S15) is performed to place the intermediate member 90 between two circumferentially adjacent magnets 5. In one example, in S15, the space between two adjacent magnets 5 is filled with the intermediate member 90 as an adhesive, and then a curing process such as heat treatment is applied. Thus, the intermediate member 90 is placed (see FIG. 6).

Then, a plate placement step (S17) is performed to place the plate 70A (70) on the inner peripheral surfaces 15 of two or more magnets 5 that are arranged continuously. The plate 70A is attached to the inner peripheral surfaces 15 with an adhesive (not shown), for example. Thus, the method of assembling the stator 20 is completed (see FIG. 6).

### <Another embodiment (first example)>

FIG. 10 is a schematic diagram of a stator 20A according to another embodiment. The stator 20A includes a cylindrical body 99 fitted into the inner peripheral surface of the plurality of tip portions 252, and the plurality of projections 53 (50) is integrally formed with the cylindrical body 99. The cylindrical body 99 is formed of a non-magnetic material, for example. More specifically, the cylindrical body 99 is formed of CFRP or GFRP.

The plurality of projections 50 protrudes radially inward from the cylindrical body 99. The projections 50 shown in FIG. 10 are integrally formed with the cylindrical body 99 and protrude radially inward with respect to the plurality of teeth 25. The plurality of projections 50 is connected to the plurality of teeth 25 via the cylindrical body 99.

No intermediate member 90 (see FIG. 3) is disposed between the magnets 5 constituting the stator 20A. Therefore, the first contact inclined end surface 49 of each of the first circumferential magnet 3 and the second circumferential magnet 4 is in direct contact with the first inclined end surface 61 of the first radial magnet 1. Even in this case, the force acting from the first contact inclined end surface 49 to the first inclined end surface 61 includes a radially outward force. This force acts to prevent the first radial magnet 1 from coming off from the teeth 25.

The second inclined end surface 62 of the second radial magnet 2 is also in direct contact with the second contact inclined end surface 48 of the second circumferential magnet 4. Even in this case, the force acting from the second contact inclined end surface 48 to the second inclined end surface 62 includes a radially outward force. This force acts to prevent the second radial magnet 2 from coming off from the teeth 25.

The stator 20A may further include the above-described plate 70. In FIG. 10, the plate 70A is shown, but the stator 20A may include the plate 70B or 70C.

### <Another embodiment (second example)>

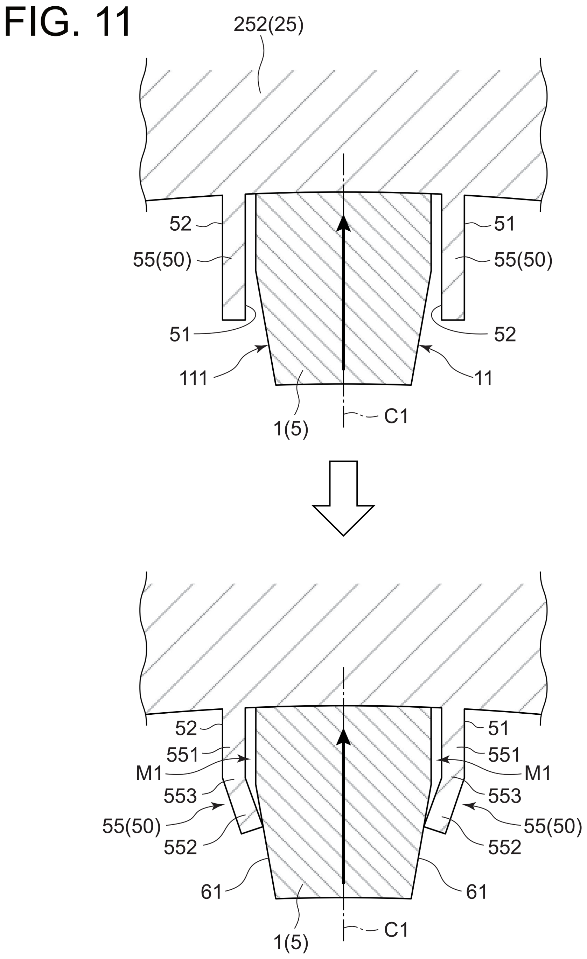

With reference to FIG. 11, the radial magnet placement step (S11 of FIG. 7) according to another embodiment will be described. After the first radial magnet 1 is placed between two projections 50 in S11, the two projections 50 may be bent toward the center C1 of the first radial magnet 1. In this case, as an example, the magnet 5 moving from the inner side to the outer side in the radial direction may not slide against the projections 50.

The shape of the projections 50 after this process (i.e., the shape of the projections 50 in the lower part of FIG. 11) will be described. In the following description, the pair of projections 50 between which the first radial magnet 1 is interposed in the circumferential direction may also be referred to as the pair of first projections 55.

Each first projection 55 includes a first base extension portion 551, a first tip extension portion 552 disposed radially inward of the first base extension portion 551, and a first bent portion 553 connecting the first base extension portion 551 and the first tip extension portion 552. The first base extension portion 551 and the first tip extension portion 552 extend along the radial direction, and the first bent portion 553 bends toward the center C1 of the first radial magnet 1 as it extends radially inward. At least one of the pair of first tip extension portions 552 is in contact with the first inclined end surface 61 of the first radial magnet 1. In the example of FIG. 11, each of one end surface 11 and the other end surface 111 of the first radial magnet 1 has the first inclined end surface 61, and the pair of first tip extension portions 552 are in contact with the pair of first inclined end surfaces 61, respectively. The first base extension portion 551 in this example faces the first radial magnet 1 with a gap M1 in the circumferential direction.

With the above configuration, the presence of the first bent portion 553 reduces the angle (acute angle) between the first tip extension portion 552 and the radial direction, so that the first radial magnet 1 is firmly sandwiched between the pair of first tip extension portion 552. This suppresses the detachment of the first radial magnet 1.

The circumferential distance between the two projections 50 is relatively long before the bending process is applied to form the first bent portions 553. In this example, the first radial magnet 1 can be moved (inserted) to the space between the two projections 50 before the bending process, so that the process (S11) of placing the first radial magnet 1 can be facilitated.

At least one of the first end surface 51 or the second end surface 52, which are opposite end surfaces of each first projection 55 (projection 50) in the circumferential direction, may be inclined with respect to the radial direction so as to slope toward the center of the first projection 55 as it extends radially inward. In this case, the process (S11) of moving the first radial magnet 1 to the space between the two first projections 55 before the bending process is further facilitated.

Further, the radially inner end surface of each first projection 55 may be a curved surface that is convex toward the radially inner side. Also in this case, since the movement of the first radial magnet 1 to the space between the two projections 50 is not hindered by the radially inner end surfaces of the first projections 55, the process (S11) of placing the first radial magnet 1 is further facilitated.

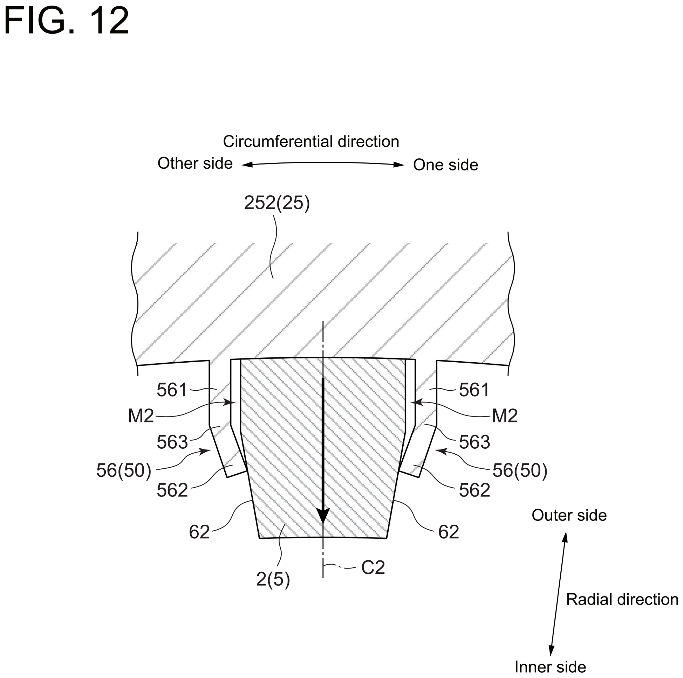

The configuration of the first projections 55 described above may be applied to the pair of projections 50 between which the second radial magnet 2 is interposed in the circumferential direction as shown in FIG. 12. In the following description, the pair of projections 50 between which the second radial magnet 2 is interposed in the circumferential direction may also be referred to as the pair of second projections 56.

Each second projection 56 includes a second base extension portion 561, a second tip extension portion 562 disposed radially inward of the second base extension portion 561, and a second bent portion 563 connecting the second base extension portion 561 and the second tip extension portion 562. The second base extension portion 561 and the second tip extension portion 562 extend along the radial direction, and the second bent portion 563 bends toward the center C2 of the second radial magnet 2 as it extends radially inward. At least one of the pair of second tip extension portions 562 is in contact with the second inclined end surface 62 of the second radial magnet 2. In the example of FIG. 12, each of one end surface 22 and the other end surface 222 of the second radial magnet 2 has the second inclined end surface 62, and the pair of second tip extension portions 562 are in contact with the pair of second inclined end surfaces 62, respectively. The second base extension portion 561 in this example faces the second radial magnet 2 with a gap M2 in the circumferential direction.

With the above configuration, the second radial magnet 2 is firmly sandwiched between the pair of second tip extension portions 562, suppressing the detachment of the second radial magnet 2.

The radial length of at least one of the first projections 55 or the second projections 56 may be not more than half the radial length of the magnets 5. The intermediate member 90 (see FIG. 6) may be placed between the magnet 5 and the projections 50 (i.e., first projection 55 and second projection 56) shown in FIGs. 11 and 12, or the plate 70 (see FIG. 6) may be placed on the magnet 5 shown in the same figures. The advantages obtained by adopting these configurations have already been described above and thus are not discussed in detail.

### <Another embodiment (third example)>

With reference to FIG. 13, a stator 20B according to another embodiment will be described. The stator 20B includes a pressing member 80. The number of pressing members 80 in this example is the same as the number of magnets 5 constituting the stator 20.

Each magnet 5 of the stator 20B includes a plurality of permanent magnets 12 stacked in the axial direction. That is, each of the first radial magnet 1, the second radial magnet 2, the first circumferential magnet 3, and the second circumferential magnet 4 includes a plurality of permanent magnets 12. The pressing member 80 presses the inner peripheral surface 15 of each permanent magnet 12 radially outward. A more specific configuration will be described below.

The permanent magnets 12 include a first permanent magnet 121 located at the axially outermost position on the first side, and a second permanent magnet 122 located at the axially outermost position on the second side opposite the first side. The first permanent magnet 121 has a first surface 121A facing the first side, and the second permanent magnet 122 has a second surface 122A facing the second side.

The stator 20B further includes a first reel 91 disposed on the first surface 121A, and a second reel 92 disposed on the second surface 122A.

The first reel 91 includes a first joint portion bonded to the first surface 121A, and a first cylinder portion disposed on the first joint portion. The first cylinder portion extends in a straight line along the circumferential direction and faces the first surface 121A with a gap in the axial direction. The first cylinder portion may be fixed to the first joint portion or may be rotatably provided on the first joint portion. A first hollow cylinder portion may be provided in place of the first cylinder portion.

The second reel 92 includes a second joint portion bonded to the second surface 122A, and a second cylinder portion disposed on the second joint portion. The second cylinder portion extends in a straight line along the circumferential direction and faces the second surface 122A with a gap in the axial direction. The second cylinder portion may be fixed to the second joint portion or may be rotatably provided on the second joint portion. A second hollow cylinder portion may be provided in place of the second cylinder portion.

The pressing member 80 in this example is a wire 89 that binds the first reel 91, the second reel 92, and the plurality of permanent magnets 12. The wire 89 is formed of CFRP or GFRP.

The wire 89 includes a first winding portion 81 wound on the first reel 91, a first axial extension portion 83 drawn from the first reel 91, a bent portion 85 that is connected to the first axial extension portion 83 and bends in contact with the second reel 92, a second axial extension portion 84 connected to the bent portion 85, a second winding portion 82 connected to the second axial extension portion 84 and wound on the first reel 91. For the sake of clarity, the second winding portion 82 is shown away from the first reel 91, but the actual second winding portion 82 is wound around the first cylinder portion of the first reel 91. For the same reason, the first axial extension portion 83 is shown away from the inner peripheral surface 15 of the permanent magnets 12, but the actual first axial extension portion 83 is in contact with the inner peripheral surface 15.

The first winding portion 81 is wound around the first cylinder portion of the first reel 91. The first axial extension portion 83 extends in the axial direction and is in contact with the inner peripheral surface 15 of each of the plurality of permanent magnets 12 from the radially inner side. More specifically, a groove (not shown) extending in the axial direction is provided on the inner peripheral surface 15 of each permanent magnet 12, and the first axial extension portion 83 is placed in the groove. The first axial extension portion 83 presses the respective inner peripheral surfaces 15 radially outward. The bent portion 85 is in contact with approximately half of the outer peripheral surface of the second cylinder portion of the second reel 92. The bent portion 85 in other examples may be wound around the second reel 92. The second axial extension portion 84 is disposed radially outward of the first axial extension portion 83 and extends in the axial direction. In this example, a hole is formed in each permanent magnet 12, and the second axial extension portion 84 is placed in the holes. In other examples, the second axial extension portion 84 may be placed in contact with the outer peripheral surface of the teeth 25 (more specifically, the outer peripheral surface of the tip portions 252 shown in FIG. 10).

With the configuration where the stator 20B includes the pressing member 80, since each permanent magnet 12 is pressed radially outward, the detachment of at least one of the plurality of permanent magnets 12 constituting each magnet 5 is suppressed. In particular, with the configuration where the pressing member 80 presses the plurality of permanent magnet 12 of the first radial magnet 1, since the first radial magnet 1, which has a relatively high risk of detachment, is pressed, the detachment of at least one of the plurality of permanent magnets 12 constituting the first radial magnet 1 is suppressed. Similarly, with the configuration where the pressing member 80 presses the plurality of permanent magnet 12 of the second radial magnet 2, since the second radial magnet 2, which has the next highest risk of detachment after the first radial magnet 1, is pressed, the detachment of at least one of the plurality of permanent magnets 12 constituting the second radial magnet 2 is suppressed.

The pressing member 80 is not limited to the wire 89. For example, it may be a rubber band that binds the stator core 24 and the plurality of permanent magnets 12. Also in this embodiment, the above advantages can be obtained. Further, at least one of the pressing member 80 that presses the first circumferential magnet 3 or the pressing member 80 that presses the second circumferential magnet 4 may not be provided. That is, the number of pressing members 80 may be less than the number of magnets 5 constituting the stator 20.

Additionally, with the configuration where the pressing member 80 is the wire 89 that binds the first reel 91, the second reel 92, and the plurality of permanent magnets 12, the second axial extension portion 84 presses each of the plurality of permanent magnets 12 radially outward due to tension generated by the wire 89 wound around at least one of the first reel 91 or the second reel 92. This suppresses the detachment of at least one of the plurality of permanent magnets 12 constituting each magnet 5.

The stator 20B may include the above-described plate 70. In this case, the first axial extension portion 83 may be placed in a groove formed on the inner surface of the plate 70. Further, the first reel 91 and the second reel 92 may be provided on the teeth 25. In this case, the second axial extension portion 84 is disposed radially outward of the tip portions 252 (see FIG. 2) and extends in the axial direction. In any embodiment, the above advantages can be obtained.

### <Another embodiment (fourth example)>

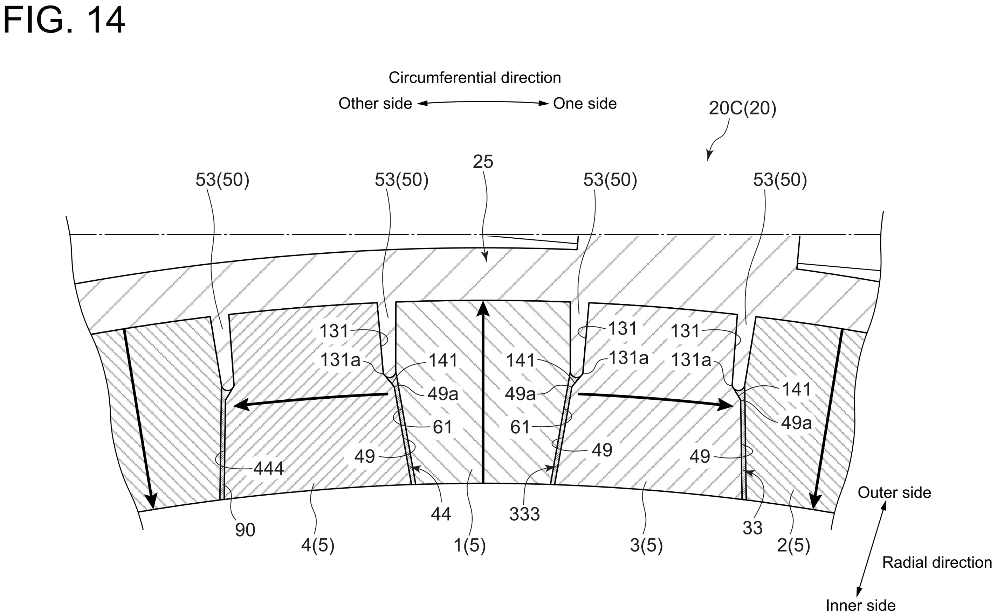

With reference to FIG. 14, a stator 20C (20) according to another embodiment will be described. More specifically, the shapes of the first circumferential magnet 3 and the second circumferential magnet 4 constituting the stator 20C will be described below.

Both the other end surface 333 of the first circumferential magnet 3 and one end surface 44 of the second circumferential magnet 4 have the first contact inclined end surface 49. Also, both the other end surface 333 and one end surface 44 further have a first extension surface 131 and a first connection surface 141. The first extension surface 131 is disposed radially outward of the first contact inclined end surface 49 and extends from the radially outer side to the inner side along the projection 53 (50). The first extension surface 131 is in direct contact with the projection 53. The first connection surface 141 is disposed radially inward of the projection 53 (50) and extends along the circumferential direction. The first connection surface 141 may extend parallel to the circumferential direction or may extend at an angle to the circumferential direction as illustrated. Further, the first connection surface 141 connects the radially inner end 131a of the first extension surface 131 to the radially outer end 49a of the first contact inclined end surface 49. At least part of the circumferential range in which the first connection surface 141 is located is included in the circumferential range in which the projection 53 (50) is located in contact with the first extension surface 131.

In the example of FIG. 14, the intermediate members 90 are interposed between the other end surface 333 of the first circumferential magnet 3 and the first inclined end surface 61 of the first radial magnet 1 and between one end surface 44 of the second circumferential magnet 4 and the first inclined end surface 61 of the first radial magnet 1, but the present disclosure is not limited thereto. For example, the other end surface 333 may be in direct contact with the first inclined end surface 61, or the one end surface 44 may be in direct contact with the first inclined end surface 61. Furthermore, either the other end surface 333 of the first circumferential magnet 3 or one end surface 44 of the second circumferential magnet 4 may not have the first contact inclined end surface 49, the first extension surface 131, and the first connection surface 141. Furthermore, at least one of one end surface 33 of the first circumferential magnet 3 or the other end surface 444 of the second circumferential magnet 4 may have the first contact inclined end surface 49, the first extension surface 131, and the first connection surface 141.

With the above configuration, since the first connection surface 141 is interposed between the first contact inclined end surface 49 and the first extension surface 131, at least one of the other end surface 333 of the first circumferential magnet 3 or one end surface 44 of the second circumferential magnet 4 rises in the circumferential direction. This increases the volume of at least one of the first circumferential magnet 3 or the second circumferential magnet 4 in the same space.

### <Another embodiment (fifth example)>

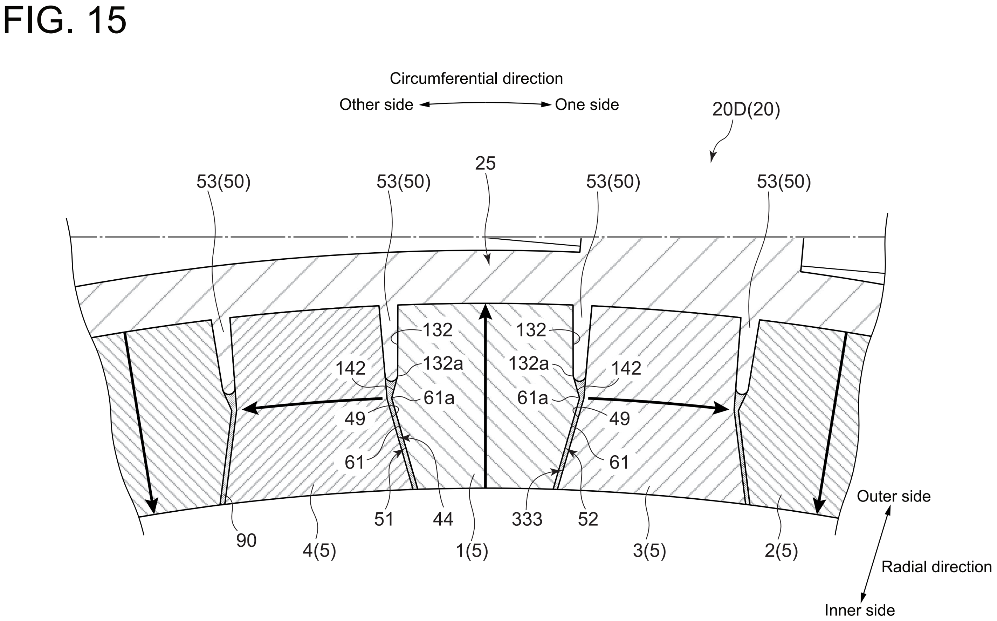

With reference to FIG. 15, a stator 20D according to another embodiment will be described. More specifically, the shape of the first radial magnet 1 constituting the stator 20D will be described below.

Both the first end surface 51 and the second end surface 52 have the first inclined end surface 61. Also, both the first end surface 51 and the second end surface 52 further have a second extension surface 132 and a second connection surface 142. The second extension surface 132 is disposed radially outward of the first inclined end surface 61 and extends from the radially outer side to the inner side along the projection 53 (50). The second extension surface 132 is in direct contact with the projection 53. The second connection surface 142 is disposed radially inward of the projection 53 (50) and extends along the circumferential direction. The second connection surface 142 may extend parallel to the circumferential direction or may extend at an angle to the circumferential direction as illustrated. Further, the second connection surface 142 connects the radially inner end 132a of the second extension surface 132 to the radially outer end 61a of the first inclined end surface 61. At least part of the circumferential range in which the second connection surface 142 is located is included in the circumferential range in which the projection 53 (50) is located in contact with the second extension surface 132.

In the example of FIG. 15, the intermediate members 90 are interposed between the first radial magnet 1 and the first circumferential magnet 3 and between the first radial magnet 1 and the second circumferential magnet 4, but the present disclosure is not limited thereto. For example, the two first inclined end surfaces 61 may be in direct contact with the first circumferential magnet 3 and the second circumferential magnet 4, respectively. Furthermore, either the first end surface 51 or the second end surface 52 may not have the first inclined end surface 61, the second extension surface 132, and the second connection surface 142.

With the above configuration, since the second connection surface 142 is interposed between the first inclined end surface 61 and the second extension surface 132, at least one of the first end surface 51 or the second end surface 52 rises in the circumferential direction. This increases the volume of the first radial magnet 1 in the same space.

It is also possible to apply both the embodiment according to the fourth example and the embodiment according to the fifth example to the stator 20. For example, of one end surface 33 and the other end surface 333 of the first circumferential magnet 3, if only the end surface 33 has the first contact inclined end surface 49, the first extension surface 131, and the first connection surface 141, then of the first end surface 51 and the second end surface 52 of the first radial magnet 1, only the first end surface 51 may have the first inclined end surface 61, the second extension surface 132, and the second connection surface 142.

### <Another embodiment (sixth example)>

The Halbach-arrayed magnet group may consist of eight magnets 5 continuously arranged in the circumferential direction. In this case, the arrangement is a so-called dual Halbach array, in which each of the first circumferential magnet 3 and the second circumferential magnet 4 adjacent to the first radial magnet 1 in the circumferential direction has magnetization components not only in the circumferential direction but also in the radial direction.

### <Conclusion>

The contents described in some embodiments described above would be understood as follows, for instance.
1) A stator (20, 20A, 20B, 20C, 20D) according to an embodiment of the present disclose includes: a stator core (24) including a plurality of teeth (25) arranged at intervals in a circumferential direction with respect to an axis (S); and a plurality of magnets (5) including a group of magnets disposed radially inward of the plurality of teeth and arranged continuously in the circumferential direction (e.g., four magnets 5 arranged continuously in the circumferential direction), the group of magnets being arranged in a Halbach array. The group of magnets includes: a first radial magnet (1) magnetized radially outward; a first circumferential magnet (3) disposed on one side of the first radial magnet in the circumferential direction and magnetized to the one side; and a second circumferential magnet (4) disposed on the other side of the first radial magnet in the circumferential direction and magnetized to the other side. At least one of one end surface (11) or the other end surface (111) of the first radial magnet in the circumferential direction has a first inclined end surface (61) that slopes toward the center (C1) of the first radial magnet in the circumferential direction as the surface extends radially inward. At least one of the other end surface (333) of the first circumferential magnet in the circumferential direction or one end surface (44) of the second circumferential magnet in the circumferential direction has a first contact inclined end surface (49) that is in contact with the first inclined end surface and slopes toward the center of the first radial magnet in the circumferential direction as the surface extends radially inward.
   With the above configuration 1), since the first contact inclined end surface is in direct or indirect contact with the first inclined end surface, a radially outward force acts on the first radial magnet. This prevents the first radial magnet from coming off from the plurality of teeth. Thus, it is possible to achieve a stator that can suppress the detachment of at least one of the plurality of magnets.
2) In some embodiments, in the stator as defined in the above 1), each of the one end surface and the other end surface of the first radial magnet has the first inclined end surface. Each of the other end surface of the first circumferential magnet and the one end surface of the second circumferential magnet has the first contact inclined end surface.
   With the above configuration 2), a radially outward force is generated at each of the one end surface and the other end surface of the first radial magnet. This further prevents the first radial magnet from coming off from the plurality of teeth.
3) In some embodiments, in the stator as defined in the above 1) or 2), the group of magnets further includes a second radial magnet (2) disposed on the other side of the second circumferential magnet in the circumferential direction and magnetized radially inward. One end surface (22) of the second radial magnet in the circumferential direction has a second inclined end surface (62) that slopes toward the center (C2) of the second radial magnet in the circumferential direction as the surface extends radially inward. The other end surface (444) of the second circumferential magnet in the circumferential direction has a second contact inclined end surface (48) that is in contact with the second inclined end surface and slopes toward the center of the second radial magnet as the surface extends radially inward.
   With the above configuration 3), since the second contact inclined end surface is in direct or indirect contact with the second inclined end surface, a radially outward force acts on the second radial magnet. This prevents the second radial magnet from coming off from the plurality of teeth. Thus, it is possible to achieve a stator that can suppress the detachment of the plurality of magnets.
4) In some embodiments, in the stator as defined in any of the above 1) to 3), the stator further includes a plurality of projections (50) protruding radially inward with respect to the plurality of teeth and alternating with the plurality of magnets along the circumferential direction. One magnet of the plurality of magnets is interposed in the circumferential direction between two circumferentially adjacent projections of the plurality of projections. A radial length of each of the plurality of projections is not more than half a radial length of each of the plurality of magnets.
   With the above configuration 4), the radial length of each of the projections can be shortened. As a result, each of the magnets can be moved from the radially inner side into a predetermined assembly position between two projections in the stator assembly process. Conventionally, a magnet must be slid in the axial direction into a predetermined assembly position between two fingers. However, since fingers and magnets generally have an elongated shape in the axial direction, the magnets must be slid a long distance, which takes more time and effort in the magnet assembly process. In this regard, with the above configuration, each magnet can be moved in the radial direction, reducing the required movement of the magnet and improving the assembly of the stator.
5) In some embodiments, in the stator as defined in the above 4), both a first end surface (51) and a second end surface (52) of each of the plurality of projections in the circumferential direction extend in the radial direction.
   With the above configuration 5), since the projections have a shape such that the circumferential length decreases toward the radially inner side, it is easy to move the magnets from the radially outer side into a predetermined assembly position. As a result, the magnet assembly process is further facilitated.
6) In some embodiments, in the stator as defined in the above 4) or 5), both one end surface (6) and the other end surface (7) of each of the plurality of magnets in the circumferential direction have projection contact surfaces (8) that are in contact with the projections and located radially outward of the first inclined end surface and the first contact inclined end surface. The projection contact surfaces extend in the radial direction.
   With the above configuration 6), since the projection contact surfaces extend along the radial direction, the projection contact surfaces are in contact with the projections over a wider radial range. As a result, each magnet is firmly sandwiched between two projections even though the radial length of the projections is short. Thus, it is possible to achieve a stator that suppresses the detachment of the plurality of magnets. Further, even though at least one of the first circumferential magnet or the second circumferential magnet has the first contact inclined end surface, the projection contact surfaces extending in the radial direction make it easier to move the circumferential magnets into a predetermined assembly position between two projections, further facilitating the stator assembly process.
7) In some embodiments, in the stator as defined in the above 6), a radial length of each projection contact surface is not more than half the radial length of each of the plurality of magnets.
   With the above configuration 7), the distance that the projection contact surface moves while sliding against the projection in the magnet assembly process can be shortened, further facilitating the stator assembly process.
8) In some embodiments, in the stator as defined in any of the above 1) to 3), the stator further includes a plurality of projections (50) protruding radially inward with respect to the plurality of teeth and alternating with the plurality of magnets along the circumferential direction. One magnet of the plurality of magnets is interposed in the circumferential direction between two circumferentially adjacent projections of the plurality of projections. The plurality of projections includes a pair of first projections (55) between which the first radial magnet is interposed. Each of the pair of first projections has a first bent portion (553) that bends toward the center (C1) of the first radial magnet.

With the above configuration 8), the first radial magnet is sandwiched between the pair of first projections more firmly. This suppresses the detachment of the first radial magnet.

The circumferential distance between the two projections is relatively long before the bending process is applied to form the first bent portions. With the above configuration 8), the first radial magnet can be moved (inserted) to the space between the two projections before the bending process, so that the process of placing the first radial magnet 1 can be facilitated.

9) In some embodiments, in the stator as defined in any of the above 4) to 8), the stator further includes a plurality of intermediate members (90) disposed radially inward of the plurality of projections, each of the plurality of intermediate members being interposed between two circumferentially adjacent magnets of the plurality of magnets.

With the above configuration 9), since an intermediate member is interposed between two adjacent magnets, the dispersion of force transmitted from one of the two adjacent magnets to the other can be reduced. As a more specific example, the intermediate member ensures stable surface contact between the first contact inclined end surface and the first inclined end surface, reducing the dispersion of force exerted from the first contact inclined end surface to the first inclined end surface. This increases the radially directed force acting on the first radial magnet and prevents the first radial magnet from coming off from the plurality of teeth. Thus, it is possible to achieve a stator that can further suppress the detachment of the plurality of magnets.

10) In some embodiments, in the stator as defined in any of the above 4) to 9), the stator further includes a plate (70) extending in the circumferential direction and attached to inner peripheral surfaces (15) of two or more magnets including the first radial magnet.

The angle between the protruding direction of the projection and the horizontal direction tends to vary among the plurality of projections. The smaller the angle between the protruding direction and the horizontal direction, the greater the radially directed force acting on the magnets from the projection, and the less likely the magnets will detach. In this regard, with the above configuration 10), the projection with the smallest angle among the three or more projections that are in contact with the two or more magnets integrated by the plate contributes significantly to suppressing the detachment of the two or more magnets integrated by the plate. Thus, it is possible to achieve a stator that can further suppress the detachment of the plurality of magnets.

11) In some embodiments, in the stator as defined in the above 10), the group of magnets further includes a second radial magnet (2) disposed on the other side of the second circumferential magnet in the circumferential direction and magnetized radially inward. The magnets to which the plate is attached include the first radial magnet and the second radial magnet.

With the above configuration 11), since the plate is attached to a plurality of magnets, including the first radial magnet and the second radial magnet, which are two magnets with relatively high risk of detachment, the detachment of the plurality of magnets can be suppressed more reliably.

12) In some embodiments, in the stator as defined in the above 10) or 11), the plate is a single member attached to the inner peripheral surfaces of the plurality of magnets along an entire circumferential length of the stator core.

With the above configuration 12), all the magnets are integrated by the plate, and the detachment of the magnets is suppressed.

13) In some embodiments, in the stator as defined in any of the above 10) to 12), the plate includes: a first plate part (71) attached to the two or more magnets; and a second plate part (72) connected to one axial end of the first plate part and longer than the first plate part in the circumferential direction. The magnets to which the second plate part is attached include the two or more magnets to which the first plate part is attached and at least one other magnet.

With the above configuration 13), the second plate part can be attached to the position where the temperature rise is moderate, and the first plate part can be attached to the position where the temperature rise is rapid. This suppresses the detachment of the integrated magnets and also reduces damage to the plate caused by thermal deformation.

14) In some embodiments, in the stator as defined in any of the above 1) to 13), the first radial magnet includes a plurality of permanent magnets (12) stacked in an axial direction. The stator further includes a pressing member (80) that presses an inner peripheral surface of each permanent magnet radially outward.

With the above configuration 14), since the first radial magnet, which has a relatively high risk of detachment, is pressed radially outward, the detachment of at least one of the plurality of permanent magnets constituting the first radial magnet can be suppressed.

15) In some embodiments, in the stator as defined in the above 14), the plurality of permanent magnets includes: a first permanent magnet (121) located at an axially outermost position on a first side; and a second permanent magnet (122) located at an axially outermost position on a second side. The stator further includes: a first reel (91) disposed on a first surface (121A) of the first permanent magnet facing the first side; and a second reel (92) disposed on a second surface (121B) of the second permanent magnet facing the second side. The pressing member is a wire (89) that binds the first reel, the second reel, and the plurality of permanent magnets.

With the above configuration 15), the tension generated by the wire wound around at least one of the first reel or the second reel pushes the plurality of permanent magnets radially outward. This suppresses the detachment of at least one of the plurality of permanent magnets constituting the magnet.

16) In some embodiments, in the stator as defined in any of the above 1) to 15), the stator further includes a plurality of projections (50) protruding radially inward with respect to the plurality of teeth and alternating with the plurality of magnets along the circumferential direction. One magnet of the plurality of magnets is interposed in the circumferential direction between two circumferentially adjacent projections of the plurality of projections. At least one of the other end surface of the first circumferential magnet in the circumferential direction or the one end surface of the second circumferential magnet in the circumferential direction has: a first extension surface (131) disposed radially outward of the first contact inclined end surface and extending along the projection, and a first connection surface (141) disposed radially inward of the projection, extending along the circumferential direction, and connecting a radially inner end of the first extension surface and a radially outer end of the first contact inclined end surface.

With the above configuration 16), since the first connection surface is interposed between the first inclined end surface and the first extension surface, at least one of the other end surface of the first circumferential magnet or the one end surface of the second circumferential magnet rises in the circumferential direction. This increases the volume of at least one of the first circumferential magnet or the second circumferential magnet in the same space.

17) In some embodiments, in the stator as defined in any of the above 1) to 16), the stator further includes a plurality of projections (50) protruding radially inward with respect to the plurality of teeth and alternating with the plurality of magnets along the circumferential direction. One magnet of the plurality of magnets is interposed in the circumferential direction between two circumferentially adjacent projections of the plurality of projections. At least one of the one end surface or the other end surface of the first radial magnet in the circumferential direction has: a second extension surface (132) disposed radially outward of the first inclined end surface and extending along the projection, and a second connection surface (142) disposed radially inward of the projection, extending along the circumferential direction, and connecting a radially inner end of the second extension surface and a radially outer end of the first inclined end surface.

With the above configuration 17), since the second connection surface is interposed between the first inclined end surface and the second extension surface, at least one of the first end surface or the second end surface rises in the circumferential direction. This increases the volume of the first radial magnet in the same space.

18) A magnetic geared electrical machine (10) according to at least one embodiment of the present disclosure includes: the stator (20, 20A, 20B) defined in any one of the above 1) to 13); a pole piece rotor (30) including a plurality of pole pieces (36) disposed radially inward of the stator and arranged in the circumferential direction; and a magnet rotor (40) including an inner magnet (41) disposed radially inward of the plurality of pole pieces.

With the above configuration 18), the same effect is achieved as in the above 1).

19) A method of assembling a stator (20, 20A, 20B, 20C, 20D) according to at least one embodiment of the present disclose is to assemble a stator that includes: a stator core (24) including a plurality of teeth (25) arranged at intervals in a circumferential direction with respect to an axis (S); a plurality of magnets (5) including a group of magnets disposed radially inward of the plurality of teeth and arranged continuously in the circumferential direction (e.g., four magnets 5 arranged continuously in the circumferential direction), the group of magnets being arranged in a Halbach array; and a plurality of projections (50) protruding radially inward with respect to the plurality of teeth and alternating with the plurality of magnets along the circumferential direction. The group of magnets includes: a first radial magnet (1) magnetized radially outward; a first circumferential magnet (3) disposed on one side of the first radial magnet in the circumferential direction and magnetized to the one side; and a second circumferential magnet (4) disposed on the other side of the first radial magnet in the circumferential direction and magnetized to the other side. At least one of one end surface (11) or the other end surface (111) of the first radial magnet in the circumferential direction has a first inclined end surface (61) that slopes toward the center (C1) of the first radial magnet in the circumferential direction as the surface extends radially inward. At least one of the other end surface (333) of the first circumferential magnet in the circumferential direction or one end surface (44) of the second circumferential magnet in the circumferential direction has a first contact inclined end surface (49) that is in contact with the first inclined end surface and slopes toward the center of the first radial magnet in the circumferential direction as the surface extends radially inward. The method includes: a step (S11) of placing the first radial magnet between two of the projections arranged continuously in the circumferential direction; and a step (S13) of placing the first circumferential magnet and the second circumferential magnet between other two of the projections arranged continuously in the circumferential direction after the step of placing the first radial magnet.

With the above configuration 19), the same effect is achieved as in the above 1).

### Reference Signs List

- 1: First radial magnet
- 2: Second radial magnet
- 3: First circumferential magnet
- 4: Second circumferential magnet
- 5: Magnet
- 6, 11, 22, 33, 44: One end surface
- 7, 111, 222, 333, 444: Other end surface
- 8: Projection contact surface
- 10: Magnetic geared electrical machine
- 12: Permanent magnet
- 15: Inner peripheral surface
- 20, 20A, 20B, 20C, 20D: Stator
- 24: Stator core
- 25: Tooth
- 30: Pole piece rotor
- 36: Pole piece
- 40: Magnet rotor
- 41: Inner magnet
- 48: Second contact inclined end surface
- 49: First contact inclined end surface
- 50, 53, 54: Projection
- 51: First end surface
- 52: Second end surface
- 55: First projection
- 56: Second projection
- 61: First inclined end surface
- 62: Second inclined end surface
- 70, 70A, 70B, 70C: Plate
- 71: First plate part
- 72: Second plate part
- 80: Pressing member
- 81: First winding portion
- 82: Second winding portion
- 83: First axial extension portion
- 84: Second axial extension portion
- 85: Bent portion
- 89: Wire
- 90: Intermediate member
- 91: First reel
- 92: Second reel
- 99: Cylindrical body
- 111: Other end surface
- 121: First permanent magnet
- 121A: First surface
- 122: Second permanent magnet
- 122A: Second surface
- 201: Slot opening
- 209: Retaining member
- 251: Protruding portion
- 252: Tip portion
- 551: First base extension portion
- 552: First tip extension portion
- 553: First bent portion
- 561: Second base extension portion
- 562: Second tip extension portion
- 563: Second bent portion
- C1: Center
- C2: Center
- S: Axis

## Claims

1. A stator, comprising:
a stator core including a plurality of teeth arranged at intervals in a circumferential direction with respect to an axis; and
a plurality of magnets including a group of magnets disposed radially inward of the plurality of teeth and arranged continuously in the circumferential direction, the magnets being arranged in a Halbach array,
wherein the group of magnets includes:
a first radial magnet magnetized radially outward;
a first circumferential magnet disposed on one side of the first radial magnet in the circumferential direction and magnetized to the one side; and
a second circumferential magnet disposed on the other side of the first radial magnet in the circumferential direction and magnetized to the other side,
wherein at least one of one end surface or the other end surface of the first radial magnet in the circumferential direction has a first inclined end surface that slopes toward the center of the first radial magnet in the circumferential direction as the surface extends radially inward, and
wherein at least one of the other end surface of the first circumferential magnet in the circumferential direction or one end surface of the second circumferential magnet in the circumferential direction has a first contact inclined end surface that is in contact with the first inclined end surface and slopes toward the center of the first radial magnet in the circumferential direction as the surface extends radially inward.

2. The stator according to claim 1,
wherein each of the one end surface and the other end surface of the first radial magnet has the first inclined end surface, and
wherein each of the other end surface of the first circumferential magnet and the one end surface of the second circumferential magnet has the first contact inclined end surface.

3. The stator according to claim 1 or 2,
wherein the group of magnets further includes a second radial magnet disposed on the other side of the second circumferential magnet in the circumferential direction and magnetized radially inward,
wherein one end surface of the second radial magnet in the circumferential direction has a second inclined end surface that slopes toward the center of the second radial magnet in the circumferential direction as the surface extends radially inward, and
wherein the other end surface of the second circumferential magnet in the circumferential direction has a second contact inclined end surface that is in contact with the second inclined end surface and slopes toward the center of the second radial magnet as the surface extends radially inward.

4. The stator according to claim 1 or 2, further comprising a plurality of projections protruding radially inward with respect to the plurality of teeth and alternating with the plurality of magnets along the circumferential direction,
wherein one magnet of the plurality of magnets is interposed in the circumferential direction between two circumferentially adjacent projections of the plurality of projections, and
wherein a radial length of each of the plurality of projections is not more than half a radial length of each of the plurality of magnets.

5. The stator according to claim 4,
wherein both a first end surface and a second end surface of each of the plurality of projections in the circumferential direction extend in the radial direction.

6. The stator according to claim 4,
wherein both one end surface and the other end surface of each of the plurality of magnets in the circumferential direction have projection contact surfaces that are in contact with the projections and located radially outward of the first inclined end surface and the first contact inclined end surface, and
wherein the projection contact surfaces extend in the radial direction.

7. The stator according to claim 6,
wherein a radial length of each projection contact surface is not more than half the radial length of each of the plurality of magnets.

8. The stator according to claim 1 or 2, further comprising a plurality of projections protruding radially inward with respect to the plurality of teeth and alternating with the plurality of magnets along the circumferential direction,
wherein one magnet of the plurality of magnets is interposed in the circumferential direction between two circumferentially adjacent projections of the plurality of projections,
wherein the plurality of projections includes a pair of first projections between which the first radial magnet is interposed, and
wherein each of the pair of first projections has a first bent portion that bends toward the center of the first radial magnet.

9. The stator according to claim 4, further comprising a plurality of intermediate members disposed radially inward of the plurality of projections, each of the plurality of intermediate members being interposed between two circumferentially adjacent magnets of the plurality of magnets.

10. The stator according to claim 4, further comprising a plate extending in the circumferential direction and attached to inner peripheral surfaces of two or more magnets including the first radial magnet.

11. The stator according to claim 10,
wherein the group of magnets further includes a second radial magnet disposed on the other side of the second circumferential magnet in the circumferential direction and magnetized radially inward, and
wherein the magnets to which the plate is attached include the first radial magnet and the second radial magnet.

12. The stator according to claim 10,
wherein the plate is a single member attached to the inner peripheral surfaces of the plurality of magnets along an entire circumferential length of the stator core.

13. The stator according to claim 10,
wherein the plate includes:
a first plate part attached to the two or more magnets; and
a second plate part connected to one axial end of the first plate part and longer than the first plate part in the circumferential direction, and
wherein the magnets to which the second plate part is attached include the two or more magnets to which the first plate part is attached and at least one other magnet.

14. The stator according to claim 1 or 2,
wherein the first radial magnet includes a plurality of permanent magnets stacked in an axial direction, and
wherein the stator further comprises a pressing member that presses an inner peripheral surface of each permanent magnet radially outward.

15. The stator according to claim 14,
wherein the plurality of permanent magnets includes:
a first permanent magnet located at an axially outermost position on a first side; and
a second permanent magnet located at an axially outermost position on a second side,
wherein the stator further comprises:
a first reel disposed on a first surface of the first permanent magnet facing the first side; and
a second reel disposed on a second surface of the second permanent magnet facing the second side, and
wherein the pressing member is a wire that binds the first reel, the second reel, and the plurality of permanent magnets.

16. The stator according to claim 1 or 2, further comprising a plurality of projections protruding radially inward with respect to the plurality of teeth and alternating with the plurality of magnets along the circumferential direction,
wherein one magnet of the plurality of magnets is interposed in the circumferential direction between two circumferentially adjacent projections of the plurality of projections,
wherein at least one of the other end surface of the first circumferential magnet in the circumferential direction or the one end surface of the second circumferential magnet in the circumferential direction has:
a first extension surface disposed radially outward of the first contact inclined end surface and extending along the projection, and
a first connection surface disposed radially inward of the projection, extending along the circumferential direction, and connecting a radially inner end of the first extension surface and a radially outer end of the first contact inclined end surface.

17. The stator according to claim 1 or 2, further comprising a plurality of projections protruding radially inward with respect to the plurality of teeth and alternating with the plurality of magnets along the circumferential direction,
wherein one magnet of the plurality of magnets is interposed in the circumferential direction between two circumferentially adjacent projections of the plurality of projections,
wherein at least one of the one end surface or the other end surface of the first radial magnet in the circumferential direction has:
a second extension surface disposed radially outward of the first inclined end surface and extending along the projection, and
a second connection surface disposed radially inward of the projection, extending along the circumferential direction, and connecting a radially inner end of the second extension surface and a radially outer end of the first inclined end surface.

18. A magnetic geared electrical machine, comprising:
the stator according to claim 1 or 2;
a pole piece rotor including a plurality of pole pieces disposed radially inward of the stator and arranged in the circumferential direction; and
a magnet rotor including an inner magnet disposed radially inward of the plurality of pole pieces.

19. A method of assembling a stator that includes:
a stator core including a plurality of teeth arranged at intervals in a circumferential direction with respect to an axis;
a plurality of magnets including a group of magnets disposed radially inward of the plurality of teeth and arranged continuously in the circumferential direction, the group of magnets being arranged in a Halbach array; and
a plurality of projections protruding radially inward with respect to the plurality of teeth and alternating with the plurality of magnets along the circumferential direction,
the group of magnets including:
a first radial magnet magnetized radially outward;
a first circumferential magnet disposed on one side of the first radial magnet in the circumferential direction and magnetized to the one side; and
a second circumferential magnet disposed on the other side of the first radial magnet in the circumferential direction and magnetized to the other side,
at least one of one end surface or the other end surface of the first radial magnet in the circumferential direction having a first inclined end surface that slopes toward the center of the first radial magnet in the circumferential direction as the surface extends radially inward,
at least one of the other end surface of the first circumferential magnet in the circumferential direction or one end surface of the second circumferential magnet in the circumferential direction having a first contact inclined end surface that is in contact with the first inclined end surface and slopes toward the center of the first radial magnet in the circumferential direction as the surface extends radially inward,
the method comprising:
a step of placing the first radial magnet between two of the projections arranged continuously in the circumferential direction; and
a step of placing the first circumferential magnet and the second circumferential magnet between other two of the projections arranged continuously in the circumferential direction after the step of placing the first radial magnet.
